# EUROPEAN PATENT SPECIFICATION

(11) **EP 2 823 522 B1**
(45) Date of publication and mention of the grant of the patent: **29.04.2020**
(21) Application number: 12790556.0
(22) Date of filing: 23.11.2012
(51) Int. Cl.: H01M 2/20, H01M 2/34, H01M 2/10, B25F 5/00, H01M 10/613, H01M 10/6563

(54) **BATTERY PACK SYSTEM**
BATTERIEPACKSYSTEM
SYSTÈME DE BLOC-BATTERIE

(30) Priority: 05.03.2012 WO PCT/EP2012/053727; 05.03.2012 WO PCT/EP2012/053738; 19.03.2012 WO PCT/EP2012/054846; 19.03.2012 WO PCT/EP2012/054847
(43) Date of publication of application: 14.01.2015
(73) Proprietor: Husqvarna AB, 561 82 Huskvarna (SE)
(72) Inventor: RIEF, Joachim, 88422 Alleshausen (DE); ZELLER, Tobias, 89233 Neu-Ulm (DE); WAIGEL, Hans, 89194 Schnürpflingen (DE); FELSER, Erik, 89155 Erbach (DE)
(86) International application number: PCT/EP2012/073443
(87) International publication number: WO 2013/131588

(56) References cited:
- EP-A1- 2 339 672
- EP-A1- 2 355 205
- EP-A2- 2 284 928
- WO-A1-2012/013641
- WO-A1-2012/014350
- US-A- 3 686 530

## Description

### TECHNICAL FIELD

Example embodiments generally relate to a power tool system using battery pack technology, in particular a backpack battery.

### BACKGROUND

Property maintenance tasks are commonly performed using various tools and/or machines that are configured for the performance of corresponding specific tasks. Certain tasks, like cutting trees, trimming vegetation, blowing debris and the like, are typically performed by hand-held tools or power equipment. The hand-held power equipment may often be powered by gas or electric motors. Until the advent of battery powered electric tools, gas powered motors were often preferred by operators that desired, or required, a great deal of mobility. Accordingly, many walk-behind or ride-on outdoor power equipment devices, such as lawn mowers, are often powered by gas motors because they are typically required to operate over a relatively large range. However, as battery technology continues to improve, the robustness of battery powered equipment has also improved and such devices have increased in popularity.

The batteries employed in hand-held power equipment may, in some cases, be removable and/or rechargeable assemblies of a plurality of smaller cells that are arranged together in order to achieve desired output characteristics. However, charging and discharging battery cells can produce heat. Therefore, when these cells are arranged together to form a battery pack, it is important to manage the thermal characteristics of the battery pack. Failure to properly manage to do can result in decreased battery performance or total failure of the battery pack. Furthermore, when used with handheld tools or outdoor power equipment, the battery packs may be operated in harsh or at least relatively uncontrolled conditions. Exposure to extreme temperatures, dust/debris, moisture and other conditions can present challenges for maintaining performance and/or integrity of battery packs.

Therefore, to increase the robustness of battery packs that may be used in relatively inhospitable environments, an improved battery pack and associated thermal management system is needed.

Additionally, the batteries employed in hand-held power equipment may, in some cases, be removable and/or rechargeable assemblies of a plurality of smaller cells that are arranged together in series and/or parallel arrangements in order to achieve desired output characteristics. However, when these cells are arranged together to form battery packs, it is important to consider that different cells may have different characteristics that could impact interactions between the cells. For example, if one cell begins to deteriorate or fail, it may reach full charge before other cells and then be exposed to high temperature and/or pressure stresses while other cells continue to charge. Furthermore, if one cell in a parallel group of cells fails (e.g., short circuits), other cells may begin to discharge at a high rate through the failed cell, which may again cause large thermal and/or pressure stresses that could result in damage to the battery pack.

To avoid damage to battery packs, it may be important to consider employing design features that can either prevent or reduce the likelihood of the early onset of failure for one or a group of cells, or otherwise provide safety mechanisms to mitigate or prevent damage when such a failure occurs. Examples of battery packs are described in EP 2 284 928 A2 and WO 2012/013641 A1

### BRIEF SUMMARY OF SOME EXAMPLES

To address the above issues, a backpack battery is provided as defined in the appended claims.

Some example embodiments may improve the performance and/or the efficacy of battery powered equipment.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 shows a system comprising a power tool, a backpack battery pack assembly and a power adapter according to the invention;
FIG. 2A illustrates a top perspective view of a portion of a battery pack according to an example embodiment;
FIG. 2B illustrates an exploded perspective view of a portion of a battery pack according to an example embodiment,
FIG. 3A illustrates a top view of the battery pack with a top part removed in order to reveal the inner structure of a cell retainer assembly of an example embodiment shown with battery cells disposed within cell reception slots;
FIG. 3B illustrates a top view of the battery pack with a top part removed in order to reveal the inner structure of the cell retainer assembly of an example embodiment shown with battery cells removed from cell reception slots;
FIG. 3C illustrates a top view of a battery pack with a top part removed in order to reveal the inner structure of a cell retainer assembly of an alternative example embodiment;
FIG. 3D shows an embodiment where airflow channels are formed that have a slightly wavy shape as airflow passes through the cell housing portion according to an example embodiment;
FIG. 7 illustrates a perspective view of a plurality of cells in a battery system including a cell connector having fuses according to an example embodiment of the present invention;
FIG. 8 illustrates a top view of the cells and exemplary cell connector of Figure 7;
FIG. 9 illustrates a top view of the cells and exemplary cell connector according to some embodiments;
FIG. 10 illustrates a top view of the cells and exemplary cell connector according to some embodiments;
FIG. 11A illustrates a top view of a portion of the exemplary cell connector of Figure 4;
FIG. 11B illustrates a side view of a portion of the exemplary cell connector illustrated in Figure 11A;
FIG. 11C illustrates a side view of a portion of an exemplary cell connector according to another embodiment;
FIG. 12 illustrates a method of protecting a battery system from thermal runaway according to some embodiments;
FIG. 13A illustrates a top view of a portion of the cell connector of Figure 2;
FIG. 13B illustrates a top view of the portion of the cell connector of Figure 6A with the fuse being broken according to an embodiment;
FIG. 14 illustrates a method of manufacturing a battery pack according to some embodiments of the invention;
FIG. 15 illustrates a the battery pack incorporated into a backpack in accordance with an example embodiment;
FIG. 16 illustrates a partially exploded view of the backpack battery pack according to an example embodiment; and
FIG. 17 illustrates a perspective and partially broken-up view of a power adapter according to an example embodiment;
FIG. 18 illustrates a fixture unit of the power adapter of FIG 17 according to an example embodiment;

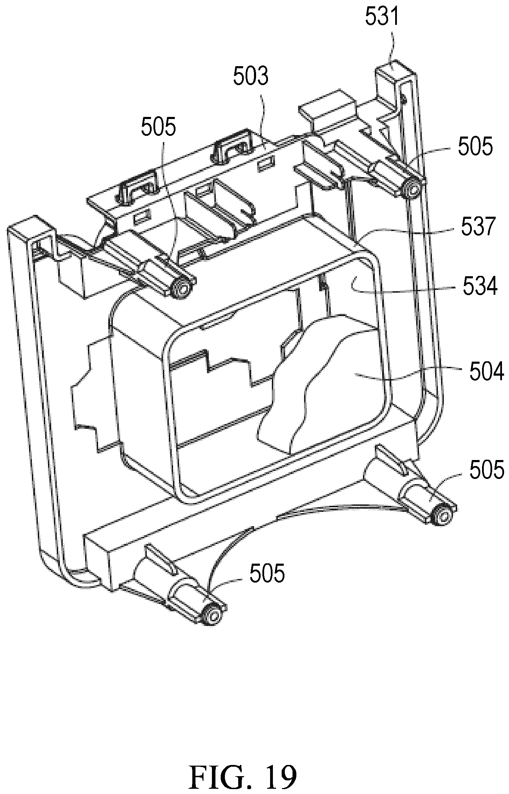

FIG. 19 illustrates a fixture sub-unit of the fixture unit FIG 2 with a balancing weight in a partially sectioned view according to an example embodiment;
FIG. 20 illustrates a perspective view of the power adapter according to an example embodiment;
FIG. 21 illustrates a front view of the power adapter according to an example embodiment;
FIG. 22 illustrates a schematic of at least a portion of a battery pack system with a relay according to an example embodiment;
FIG. 23A illustrates a top perspective view of a battery pack according to an example embodiment;
FIG. 23B illustrates a bottom perspective view of the battery pack of FIG. 23A;
FIG. 23C illustrates a top view of the battery pack of FIG. 23A;
FIG. 23D illustrates a side view of the battery pack of FIG. 23A; and
FIG. 24 illustrates a top view of three separate rows of battery cells according to some embodiments.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection or interaction of components that are operably coupled to each other.

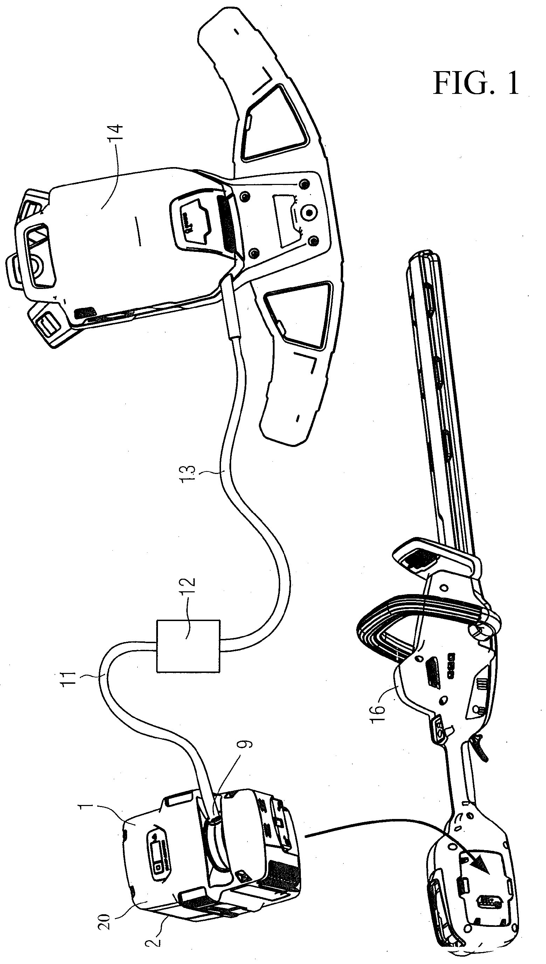

Some example embodiments may provide for a battery pack that can be useful in connection with battery powered tools or battery powered outdoor power equipment. The battery pack system may include a battery pack, a harness system, and an adapter which can be attached to a power tool to supply electrical power to the power tool. FIG 1 illustrates an embodiment of the battery pack system including a power tool 14 with a power adapter 1 and an external battery supply, such as a backpack battery assembly 14, is shown. The power adapter 1 has an electrical cable 11 exiting from its cable outlet 9 which electrical cable 11 is electrically connected through an electrical connector 12, in particular a magnetic or a plug-socket-connector, to an electrical cable 13 of a backpack battery assembly 14 to be carried on the back of a user while the user holds the power tool 16 in his hands. The power adapter 1 is illustrated in FIG. 1 as not yet inserted into the power tool 16. Although the power adapter 501 has a cord or cable for connection to the batteries, the power tool 16 itself remains a cordless power tool. In particular, the cable may be carried by the user and not fall on the ground, nor will the length of the cables 11 and 13 restrict the range of the power tool 16, and thus maintaining the mobility of a cordless battery powered power tool.

As can be seen, the power adapter 501 as proposed greatly improves operation of cordless tools, in particular cordless power tools, in cases in which comparatively heavy energy sources, i.e. battery pack with comparatively high load capacities are used.

Each of the features of the battery pack system are discussed below under respective headings. Features of the battery pack are discussed first, including the battery pack thermal management system, electrically symmetrical battery cell connector, and a cell connector with internal fuse. The backpack that carries the battery pack is then discussed. Thereafter, the power adapter is described.

### I. BATTERY PACK THERMAL MANAGEMENT SYSTEM

As mentioned above, outdoor power equipment that is battery powered, and battery powered tools generally, typically include battery packs that include a plurality of individual cells. The battery pack has a positive terminal and a negative terminal which provides power to the power tool via a power adapter. In order to achieve sufficient power, cells are organized and interconnected (e.g., in series and/or parallel connections as is discussed below) to group the cells within a battery pack in a manner that achieves desired characteristics. The battery pack is inserted into a backpack.

The cells of the battery pack are often rechargeable, cylindrical shaped cells. However, cells with other shapes, and even replaceable batteries could alternatively be employed in other embodiments. Given that the batteries produce energy via electrochemical reactions that generate heat, the battery pack may tend to heat up during charging or discharging operations. In particular, when the equipment operated by the battery pack is working hard, the discharge rates may be high. High capacity cells also tend to have high internal resistances. Accordingly, since power is equal to the square of current times resistance, it is clear that a high discharge rate will cause high power dissipation, and therefore high temperatures. Likewise, fast charging of the battery pack can also produce high temperatures. Given that cells are typically designed to operate within defined temperature ranges (e.g., -10° C to +65° C), temperature increases should be maintained at relatively low levels. If heat generation is excessive, temperatures may reach extreme levels at which cell damage may occur.

The cells are held in place by a cell retainer. In some cases active cooling of the cells may be undertaken by forcing a cooling fluid (e.g., air) through the cell retainer (e.g., with a fan or pump) to carry heat away from the cells. However, the cells may be disposed in a pattern such that they are spaced apart from one another to form columns and rows, or some other distributed arrangements. When the cooling fluid is forced into one end of the cell retainer, the flow path around the cells may become very confused and turbulent due to the potential for numerous cross-flow paths between cells. This degradation of air flow may make it particularly difficult to ensure consistent cooling of cells throughout the battery pack.

Accordingly, some example embodiments may provide for a cell retainer structure that provides better and/or more evenly distributed cooling of the cells of the battery pack. In this regard, some example embodiments may close the spacing between selected cells so that defined fluid flow channels (e.g., airflow channels) may be created to provide a more even, consistent, predictable, and/or coherent flow of air past the cells to carry heat away from the cells. This may prevent excessively high temperatures that could cause thermal damage to cells or lead to thermal runaway. Better cell cooling may also cause cells to age more slowly and to lose their charge capacities more slowly. Prevention of overheating may also improve the operator experience since high temperature protective shutdowns of equipment may be avoided.

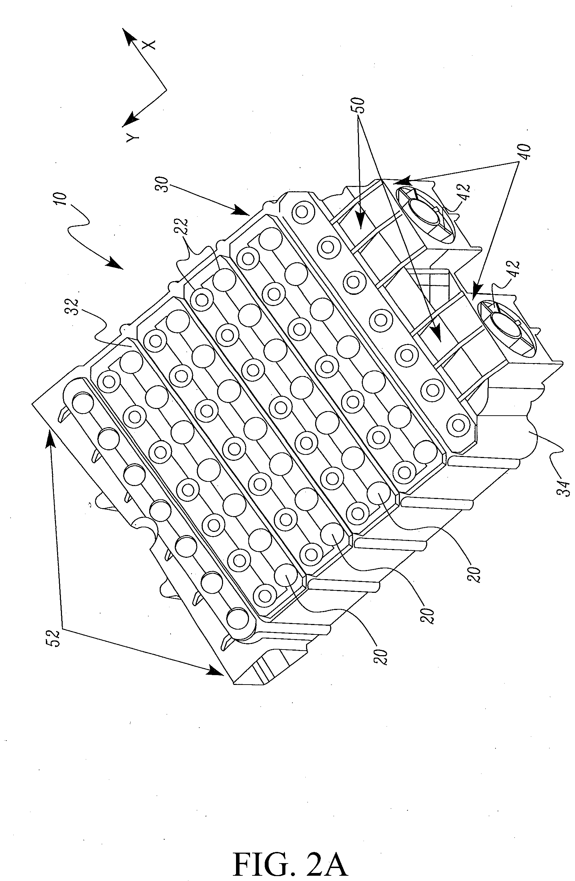

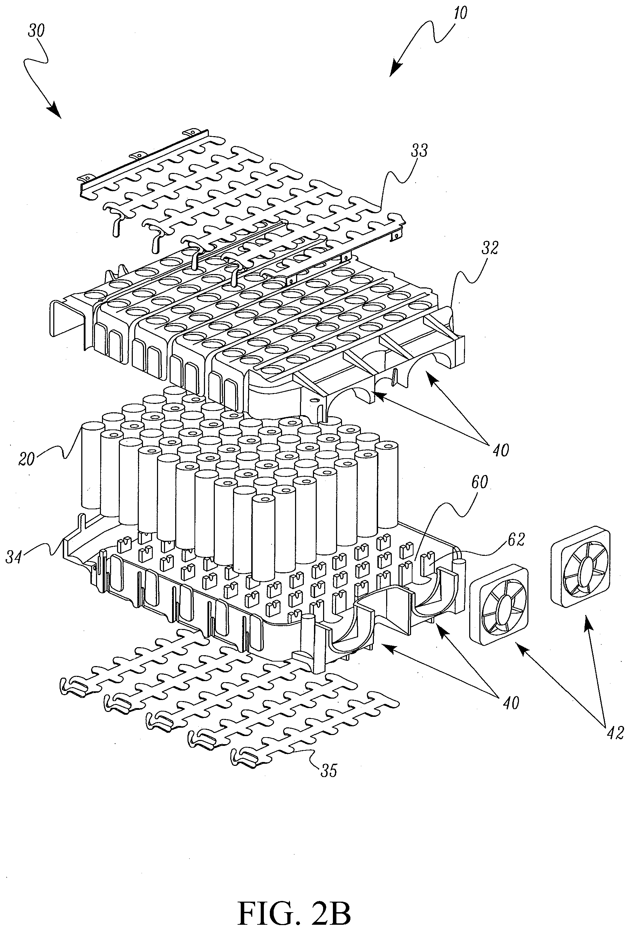

FIG. 2A illustrates one example of a top perspective view of a portion of a battery pack 10. FIG. 2B provides an exploded perspective of the battery pack 10. The battery pack 10 includes a plurality of individual cells 20 disposed within a cell retainer assembly 30. The cell retainer assembly 30 may include a plurality of cell reception slots into which the cells may be disposed and retained. The cell reception slots may be configured to conform to the size and shape of the cells 20 so that the cells 20 may be fixed in place within the cell retainer assembly 30. The cell retainer assembly 30 may further accommodate cell connection circuitry and/or electrodes (e.g., conductors, wires, and/or bars) that may be used to connect cells in series, parallel and/or combinations thereof to achieve the electrical characteristics desired for the battery pack 10.

Each of the cells 20 may be any suitable type of battery cell. For example, the cells 20 may be nickel-metal hydride (NiMH), nickel-cadmium (NiCd), lithium-ion (LIB), or other similar cells. Thus, in some cases, nominal cell voltages may range from about IV to about 4V. Series connection of multiple cells may be used to increase the voltage rating of the group of connected cells, and parallel connection of multiple cells may be used to increase the power capacity of the battery pack.

In this example, the cell retainer assembly 30 may include a top part 32 and a bottom part 34, each of which may be molded to fit together to contain the cells 20. As such, for example, the top part 32 and the bottom part 34 may each be separately molded such that the cells 20 may be disposed within the bottom part 34 in corresponding cell reception slots formed within the bottom part 34. The top part 32 may then be snapped, screwed, welded or otherwise held in connection with the bottom part 34 in order to form the cell retainer assembly 30 in its assembled form.

As illustrated by the figures, in some embodiments the side walls of the cell retainer assembly 30 have a height slightly greater than the length of a cell 20. Furthermore, the top and bottom walls at least partially cover the ends of each cell 20 so that, when the top part 32 and bottom part 34 are attached together, the cells 20 are contained and held within the cell retainer assembly 30.

The top part 32 and bottom part 34 may each include respective electrodes 33 for providing the series and/or parallel connection of the cells 20. In the illustrated battery pack 10, the top part 32 and the bottom part 34 of the cell retainer assembly 30 both include connection holes 22 through which electrical connections can be made with the cells 20 that are contained within the cell retainer assembly 30. Specifically, the cell retainer assembly is configured so that there is one connection hole 22 at the end of each cell retention slot so that an electrical connection can be made to the positive and negative terminals on opposing ends of each cell. In the illustrated embodiment, the connection holes 22 are round and each have a diameter at least somewhat smaller than the diameter of a cell 20 so that the cells cannot move through the connection holes 22 and, in some embodiments, so that air flowing through the cell retainer assembly 30 cannot easily escape between the cell 20 and its corresponding connection holes 22.

In the illustrated embodiment, the battery pack 10 includes ninety cells disposed in a common plane with the longitudinal axis of each cell parallel to the longitudinal axis of each other cell. The cells have generally uniform spacing so as to create a substantially rectangular arrangement of cells. Specifically, groups of ten cells are electrically connected in series in each column of cells 20 along the y-direction, and groups of nine cells are electrically connected in parallel in each row of cells 20 along the x-direction. In other words, the battery pack comprises ten rows of cells with nine cells in each row or, said another way, nine columns of cells with ten cells in each column. The series connected columns are electrically connected to each other in parallel by electrical connectors 33 that connect the cells in each row in parallel. In the illustrated embodiment, the cells in each column have alternating polarities and the cells in each row have uniform polarities so that one connector can at the same time connect a row of cells in parallel and pairs of cells from adjacent rows in series. However, it will be appreciated that any desirable electrical connection may be employed and any arrangement may be employed in terms of the number of cells in the battery pack 10 and the physical and electrical organization of the cells therein.

As shown in FIGS. 2A and 2B, the cell retainer assembly 30 may include at least one fan housing 40 disposed at one end of the cell retainer assembly 30. In this embodiment, the fan housing 40 may be integrally formed within the cell retainer assembly 30. Moreover, since the cell retainer assembly 30 may be formed of the top part 32 and the bottom part 34, a top portion of the fan housing 40 may be integrally formed in the top part 32, while a bottom part of the fan housing 40 may be integrally formed in the bottom part 34. A fan 42 may be disposed in each fan housing 40 that is provided in the cell retainer assembly 30. Specifically, in the illustrated embodiment, the fans 42 have a square exterior and the fan housing 40 comprises a corresponding square shape slightly larger than that of the fans 42. The fan housing 40 has two walls spaced apart a distance slightly larger than the width of a fan 42 so that the walls created a cradle between which a fan 42 can be placed. These walls of the fan housing 40 overlap a portion of the fan assembly to hold the fan 42 in place in the cell retainer assembly 30, but form a circle through which air can travel to and from the fan 42. In this way, assembly of the fans in the cell retainer may be made easy. In some embodiments, the fan housing 40 may include a seal, gasket, or resilient member around the perimeter so that air only flows by the fan blades and not between the fan 42 and the fan housing 40.

Of note, in embodiments where a fluid other than air is used for cooling, the fan housing 40 may instead be replaced with a pump housing that is integrally formed in the cell retainer assembly 30 and the fan 42 may be replaced by a pump. Furthermore, although many embodiments of the thermal management system are described here as being used for preventing overheating of the battery pack 10, some embodiments could be used similarly for heating a battery pack where the battery pack is used in an extremely cold environment. Instead of blowing air from the environment through the cell retainer assembly 30, heated air could be blown through the cell retainer assembly to warm the battery pack 10 above a predefined minimum threshold temperature.

Referring again to the figures, the fan 42 (or fans) may be powered from the battery pack 10 or from its own smaller electrical source (e.g., a smaller rechargeable or replaceable battery). Operation of the fan 42 may push air through cell retainer assembly 30 to cool the cells 20. In some embodiments, control circuitry may be provided for control of the fan 42. The control circuitry may be in communication with a temperature sensor to initiate fan 42 operation at a predetermined threshold temperature (or secure fan 42 operation when below a particular temperature). In some embodiments, the control circuitry may further be enabled to secure operation of the fan and/or the device powered by the battery pack 10 responsive to temperatures reaching levels that are considered too high for operation of the device. Moreover, the control circuitry may prevent device operation if, for some reason, the fan 42 fails to operate when temperatures requiring fan operation are reached. In other embodiments, the control circuitry may control the fan at least in part based on whether the battery pack 10 is being charged or discharged. For example, the control circuitry may always operate the fans while the battery pack 10 is being charged or discharged. When the operator stops charging or discharging the battery pack, the control circuitry may then run the fan for a preset amount of time thereafter and/or may communicate with a temperature sensor and operate the fan until the temperature of the battery pack falls below a threshold temperature.

In an example embodiment, the cell retainer assembly 30 may include an inlet air guide 50 that is disposed at an outlet of the fan 42 (or fans) to guide air into channels that are defined between some of the cells 20 as described in greater detail below. As such, the fan 42 may be configured to push air linearly through the cell retainer assembly 30 via the inlet air guide 50. In the illustrated embodiment, in order to keep a relatively thin profile for the battery pack 10, the fans 42 have a diameter approximately equal to the longitudinal length of a cell 20 so that the fans 42 do not significantly add thickness to the battery pack 10. However, since the battery pack 10 is wider than the twice the diameter of the fan 42, the inlet air guide 50 includes a diffuser that is configured so that the airflow exiting the fan is spread outward to either side of the fan to create an appropriate flow of air throughout the cell retainer assembly 30. In other embodiments, one fan or more than two fans may be used with larger or smaller diffusers in the air inlet guides 50.

In some cases, the air may enter the cell retainer assembly 30 in a first direction (e.g., the y-direction) and be pushed past all of the cells 20 while substantially maintaining the first direction. After passing by all of the cells 20, the air may exit the cell retainer assembly 30 via outlet air guides 52 in a second direction (e.g., the x-direction) that is substantially perpendicular to the first direction. However, in some embodiments, the air may exit the cell retainer assembly 30 also in the first direction. Regardless of how the air enters or exits the portion of the cell retainer assembly 30 in which the cells 20 are housed, the air within the portion of the cell retainer assembly 30 in which the cells 20 are housed may substantially maintain only one direction while passing therethrough. Moreover, the cell retainer assembly 30 may provide for the inlet, outlet and channel fluid paths to be defined entirely between two planes defined by the top and bottom of the top part 32 and bottom part 34, respectively.

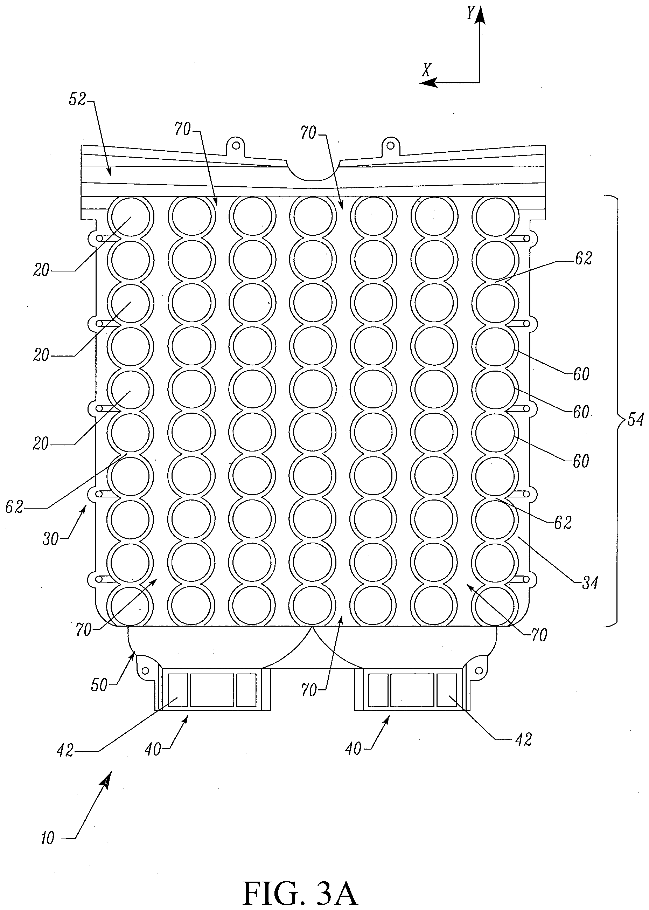

FIG. 3A illustrates a top view of the battery pack 10 with the top part 32 removed in order to reveal the inner structure of the cell retainer assembly 30 of an example embodiment. Of note, the battery pack 10 in FIG. 3A has ten cells per column and seven cells per row rows to illustrate the fact that any number of cells may be supported by example embodiments. As can be appreciated from the view shown in FIG. 3A, the cells 20 may be disposed within the cell retainer assembly 30 such that a longitudinal length of the cells extends substantially perpendicular to a direction of the flow of air through the cell retainer assembly 30. As shown in FIG. 3A, the cells 20 may be held within the cell retainer assembly 30 in cell reception slots 60. In some embodiments, the walls of the cell reception slots 60 may be made from a material that has a high thermal conductivity (e.g., metal or thermally conductive plastic) to enable heat to be readily dissipated or transmitted away from the cells 20 so that air forced into the inlet air guide 50 may pass by the cell reception slots 60 (or portions thereof) to carry heat away from the cells 20 while the air passes to the outlet air guide 52. In some embodiments, the cell reception slots 60 are integrally formed in the cell retainer assembly 30 and are, therefore, made of the same material as the cell retainer assembly 30.

As illustrated in FIGS. 2B-3D, the cell retainer assembly 30 generally includes a plurality of ribs 62. As used herein, a rib 62 generally refers to material disposed between adjacent cell reception slots (i.e., between adjacent cells) to inhibit air from flowing in the space between the adjacent cells/cell reception slots. In the embodiments illustrated by the figures, the cell retainer assembly 30 includes ribs 62 between adjacent cells in each column of cells that inhibit air from flowing through the space between adjacent cells in a column. In this way, airflow channels 70 are created between adjacent cell columns, where the airflow channels 70 extend from an inlet air guide 50 to an outlet air guide 52, and where air in one airflow channel 70 is substantially prevented from flowing into another airflow channel 70. It will be appreciated that, although the embodiments illustrated in the figures show ribs 62 between adjacent cells in a column and airflow channels 70 created between adjacent columns, other embodiments could instead have ribs between adjacent cells in each row that create airflow channels between adjacent rows. Likewise, although the embodiments illustrated in the figures show ribs 62 between adjacent series-connected cells and airflow channels 70 created between adjacent columns of series-connected cells, in other embodiments the orientation of the cells could be altered to where the ribs are located between adjacent parallel-connected cells to create airflow channels between adjacent columns of parallel-connected cells.

In some embodiments, the ribs 62 may be disposed on substantially opposite sides (e.g., about 180° apart relative to the periphery of the cell reception slots 60 that have adjacent slots on each side) of each of the cells in a column (or row) such that the cell reception slots 60 of each respective column (or row) define a continuous wall that extends from a point where air leaves the inlet air guides 50 to a point where air enters the outlet air guides 52.

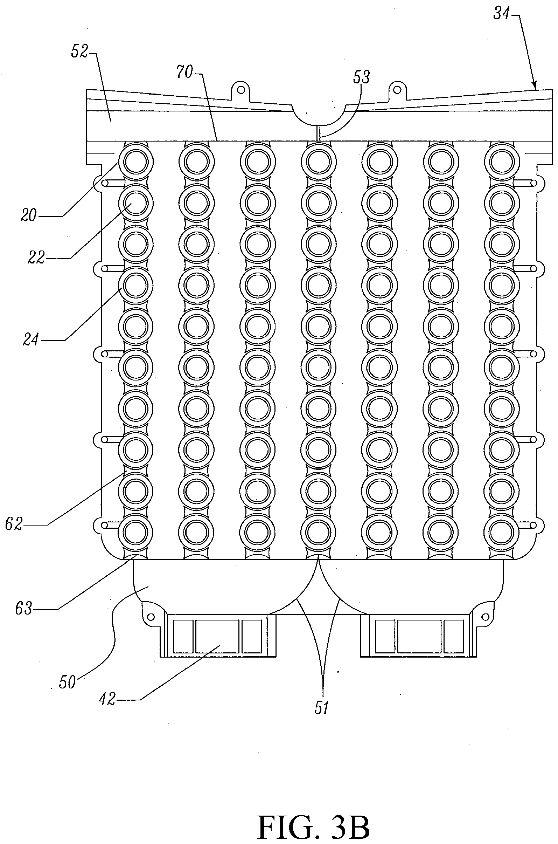

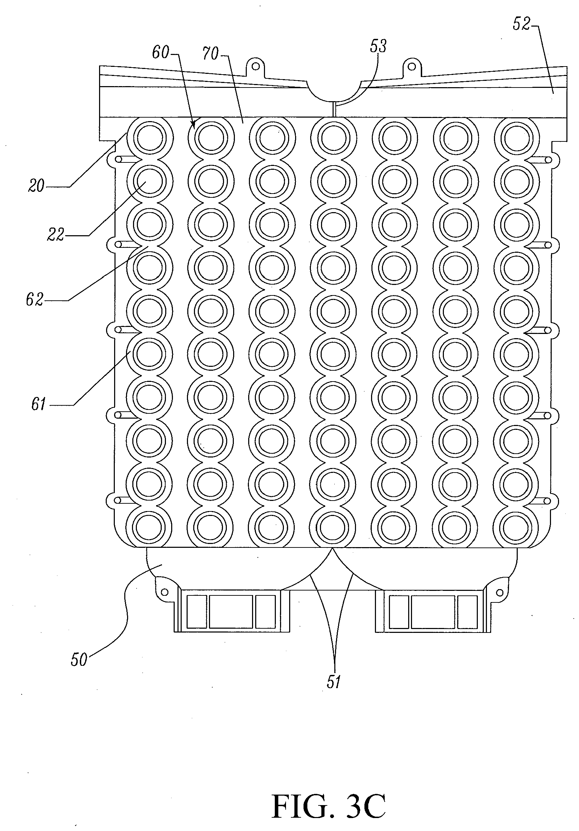

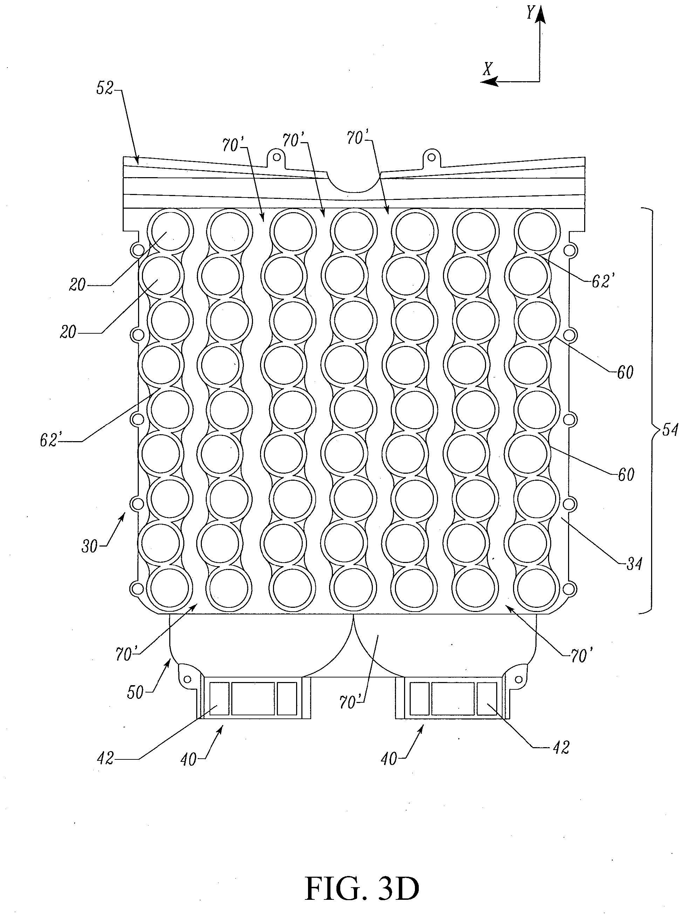

In other words, the cell housing portion 54 of the cell retainer assembly 30 may provide walls formed between adjacent cells (e.g., cells in a same column that are series connected to each other) by the placement of ribs 62 that are positioned 180° apart from each other relative to the circumference of the cell reception slots 60. These walls may be substantially parallel to each other extending from inlet to outlet of the cell housing portion 54. These ribs 62 combine with sidewalls of the cell reception slots 60 or the sidewalls of the cells 20 disposed therein to form continuous walls that define parallel fluid flow channels (e.g., airflow channels 70) in the cell housing portion 54 of the cell retainer assembly 30. In an example embodiment, one airflow channel 70 may be defined between each of the adjacent columns of cells. Moreover, as can be appreciated from FIG. 3, the airflow channel 70 may characteristically pass substantially linearly through the cell housing portion 54 and may extend substantially parallel to each other from inlet to outlet of the cell housing portion 54. As such, the continuous walls formed may cut off any cross-flow channels that would otherwise exist to allow airflow between adjacent cells in the same column. Accordingly, the airflow channels 70 are formed between sides of adjacent cells such that air flows substantially in a single direction (e.g., the y-direction in FIGS. 2 and 3) as it passes by the sides of the adjacent cells through the cell housing portion 54 in order to prevent cross-flow between at least some cells where the cross-flow would be in another direction (e.g., in the x-direction in FIGS. 2 and 3).

It should also be appreciated that some minor components of the overall airflow through the airflow channels 70 may be in other directions. For example, some small eddy currents or other turbulent flow components may exist. However, generally speaking, these will be minor components and rather negligible. Although fully laminar flow through the airflow channels 70 may not be provided, the overall direction of flow through the cell housing portion 54 will be in a single direction and cross-flow (or just airflow in general) will be prevented between at least two adjacent cells (e.g., series connected cells or cells in the same column). In the illustrated embodiment, the single direction is a direction that is substantially perpendicular to the longitudinal length of the cells 20.

FIG. 3A illustrates a top view of the battery pack with a top part removed in order to reveal the inner structure of a cell retainer assembly of an example embodiment shown with battery cells disposed within cell reception slots. FIG. 3B also illustrates a top view of the battery pack with a top part removed, but also shows the battery pack with the battery cells removed from cell reception slots to better illustrate the structure of the cell retainer assembly according to an example embodiment. In the example embodiment illustrated in FIGS. 2B, 3A, and 3B the ribs 62 at least partially define the cell reception slots 60. Specifically, in this embodiment the ribs 62 between adjacent cell reception slots 60 in each column and end ribs 63 at the end of each column extend perpendicularly from the walls of the bottom part 34 and top part 32 and function to help hold the cells 20 in place in the cell retainer assembly 30. In this embodiment the cell reception slots 60 are otherwise open between the ribs. In this way, when a cell 20 is inserted into a cell reception slot 60, a portion of the cell sidewall is exposed to the air in the adjacent airflow channel(s) 70. However, the cell 20 may fit tightly or closely with the adjacent ribs to that the cell sidewall combines with the adjacent ribs to define a continuous wall of the airflow channel(s) 70 and inhibits air from one airflow channel flowing into another airflow channel.

FIG. 3B also further illustrates holes 22 in the bottom part 34 at one end of each cell reception slot 60. As described above, these holes 22 allow each cell to electrically connect with connectors located on the outside of the cell retainer assembly 30. The holes 22 may have a smaller diameter than that of a cell so that cell and the wall of the cell retainer assembly 30 come together to inhibit air flowing through the interior of the cell retainer assembly 30 from flowing through the holes 22. A gasket, resilient member, or other seal 24 may be located around each hole 22 to further prevent air, moisture, or debris from leaking through the hole and contaminating the electrical connections and/or components located on the exterior of the cell retainer assembly. Similar holes 22 and, in some embodiments, seals 24 are also located in the top part 32 for allowing an electrical connection to be made to the other end of the cell while isolating the electrical connection(s) and/or components from the air flowing through the interior of the cell retainer assembly. In this regard, it should be appreciated that embodiments of the battery pack 10 described herein may be particularly advantageous for use in dirty, dusty, or moist environments (e.g., such as those often experienced when using outdoor power equipment or construction equipment) because the intelligent design serves to control the temperature of the battery pack 10 by blowing air from the battery pack's environment through the battery pack 10, but at the same time substantially prevents the air that's blown through the battery pack 10, which may carry moisture, dust, dirt, and other debris from then environment, from contaminating many of the electrical components of the battery pack 10.

In another example embodiment illustrated in FIG. 3C, the cell reception slots 60 may be at least partially defined by slot walls 61 that completely or substantially surround sidewalls of the cells 20. As such, for example, the cell reception slots 60 may include walls 61 that surround radial edges of the cells 20 over substantially all of the longitudinal length of the cells 20 when the top part 32 and bottom part 34 are joined together, thereby encasing the cell. Moreover, in some cases, the cell reception slots 60 may be positioned relative to one another such that at least some sidewall portions defining the cell reception slots 60 are in direct contact with, shared with, or essentially part of, corresponding sidewall portions of adjacent cell reception slots.

Such intersections between cell reception slots 60 are still referred to herein as ribs 62. In the example of FIG. 3C, the ribs 62 are formed by the intersection (or direct connection) of slot walls 61. However, in other embodiments, the ribs 62 could be formed by the insertion of material between the slot walls 61 of adjacent cell reception slots 60 in order to prevent airflow between the cell reception slots 60 joined by the respective ribs 62. The material used to form the slot walls 61 and the ribs 62 may be thermally conductive material. However, the ribs 62 could be formed of any material sufficient to prevent cross-flows from one airflow channel to another in the area between the corresponding joined cells.

FIGS. 3A-3C also illustrate how, in some embodiments, the walls 51 of the inlet air guide 50 may be configured to meet with the cell 20, slot wall 61, or end rib 63 at the end of the column located halfway between the fans 42 to prevent cross-flow of air from the inlet air guide 50 of one fan to the inlet air guide 50 of another fan. Likewise, a wall 53 in the outlet air guide 52 may be configured to meet with the cell 20, slot wall 61, or end rib 63 at the end of the column located halfway between the outlets to prevent cross-flow of air between the two outlet channels. The figures also illustrate how embodiments of the outlet air guide 52 includes two channels taking air to either side of the battery pack and how these channels expand as they get closer to the outlets on the sides of the battery pack. This expansion may help to keep a uniform unobstructed airflow from the airflow channels 70 into the outlet channel and then through the outlet channel in the direction of the side outlets since the outlet channel must handle a greater volume of air as it gets closer to the side outlets due to the additional air being added by each successive airflow channel 70.

FIG. 2B illustrates one embodiment where the ribs and other walls of the cell retainer assembly are formed by ribs and walls of the bottom part 34 meeting with corresponding ribs and walls of the top part 32 to form the complete ribs and other walls. However, it will be understood that in other alternative embodiments the ribs and/or other walls may extend to their full heights from either the top part 32 or the bottom part 34.

In the examples of FIGS. 2-3C, the airflow channels 70 may be essentially straight. However, some minor curvature may be accommodated in some example embodiments. For example, FIG. 3D shows an embodiment where airflow channels 70' are formed that have a slightly wavy shape as airflow passes through the cell housing portion 54. The structure of FIG. 3D may be achieved by offsetting alternating cells in each column slightly and moving the ribs 62' to portions of the cell reception slots 60 that are not directly opposite of each other of relative to the cells 20. Thus, whereas placing the ribs 62 on opposite sides of cells 20 in the same column in FIG. 3 cause a substantially linear flow through the cell housing portion 54 to remove heat from the cells 20, placing each subsequent one of the ribs 62' less than 180 degrees away from a preceding rib, the embodiment of FIG. 3D creates a wavy flow path through the cell housing portion 54. However, in this example embodiment as well, cross-flow is prevented between at least two adjacent cells (e.g., series connected cells or cells in the same column), while the overall direction of flow continues to be in a single direction (e.g., a direction substantially perpendicular to the longitudinal length of the cells 20).

As can be appreciated from the example embodiments above, some embodiments may provide a battery pack including a cell housing and a plurality of cell reception slots disposed therein. The cell housing may be configured to retain a plurality of battery cells. The plurality of cell reception slots may be disposed within the cell housing to receive respective ones of the battery cells. The cell reception slots may be disposed within the cell housing to define at least one fluid flow channel extending substantially in a first direction through the cell housing. The fluid flow channel may be defined at least partially by a rib connecting at least two adjacent cell reception slots to enable heat removal from cells disposed in the at least two adjacent cell reception slots responsive to movement of a fluid through the fluid flow channel and to prevent a cross-flow of fluid between the at least two adjacent cell reception slots in a direction other than the first direction.

In some cases, modifications or amplifications may further be employed including (1), the cell reception slots may be disposed in a same plane to hold the cells such that a longitudinal centerline of each one of the cells is parallel to a longitudinal centerline of other ones of the cells. The cell reception slots may be disposed in at least two columns within the cell housing such that the cell reception slots of each cell in a same column are directly connected to each other by respective ribs to form respective sidewalls of the fluid flow channel. In an example embodiment (2), the ribs may be formed on substantially opposite sides of the cell reception slots to form a substantially straight flowpath through the fluid flow channel or may be formed (3) less than 180 degrees away from each other on opposing sides of the cell reception slots to form a substantially wavy flowpath through the fluid flow channel.

In an example embodiment, none, any or all of modifications/amplifications (1) to (3) may be employed and the first direction may be substantially perpendicular to a longitudinal centerline of the cell reception slots, or the first direction may be substantially parallel to a longitudinal centerline of the cell reception slots. In some cases, none, any or all of modifications/amplifications (1) to (3) may be employed and the battery pack may further include a fan configured to operate to force air through the fluid flow channel. In an example embodiment, none, any or all of modifications/amplifications (1) to (3) may be employed and the cell housing forms a portion of a cell retainer assembly, where the cell retainer assembly includes a top part forming substantially a top half of the cell retainer assembly and a bottom part forming substantially a bottom half of the cell retainer assembly. The top part and bottom parts fit together to form the cell retainer assembly, and the cell retainer assembly defines the cell housing, an inlet flow guide distributing air into a plurality of fluid flow channels in the first direction and an outlet flow guide for directing air exiting from the fluid flow channels to a second direction that is substantially perpendicular to the first direction. In some embodiments, none, any or all of modifications/amplifications (1) to (3) may be employed and the cell housing forms a portion of a cell retainer assembly. The cell retainer assembly may further include a fan housing integrally formed as a portion of the cell retainer assembly.

### II. ELECTRICALLY SYMMETRICAL BATTERY CELL CONNECTOR

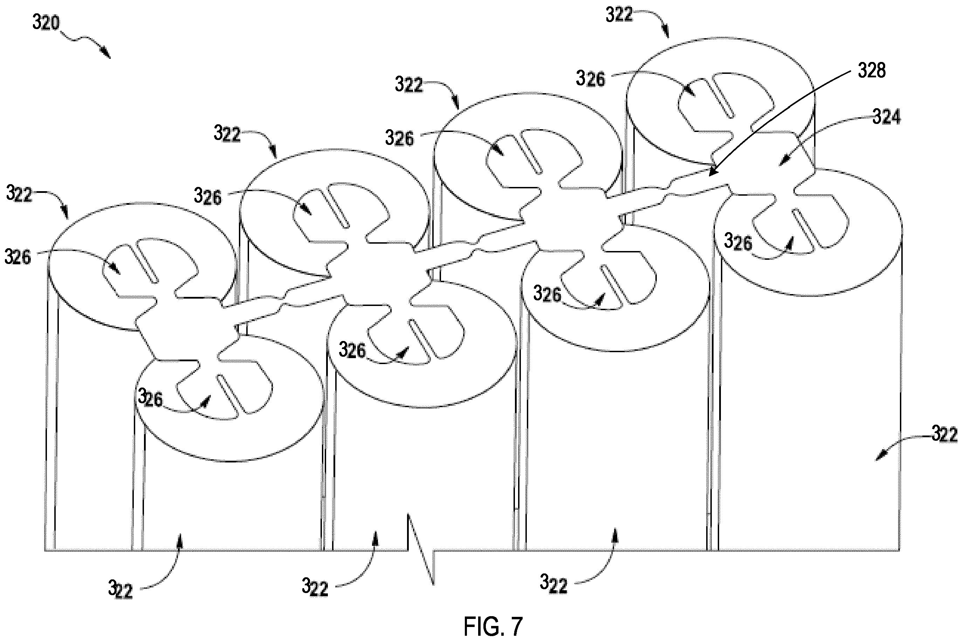

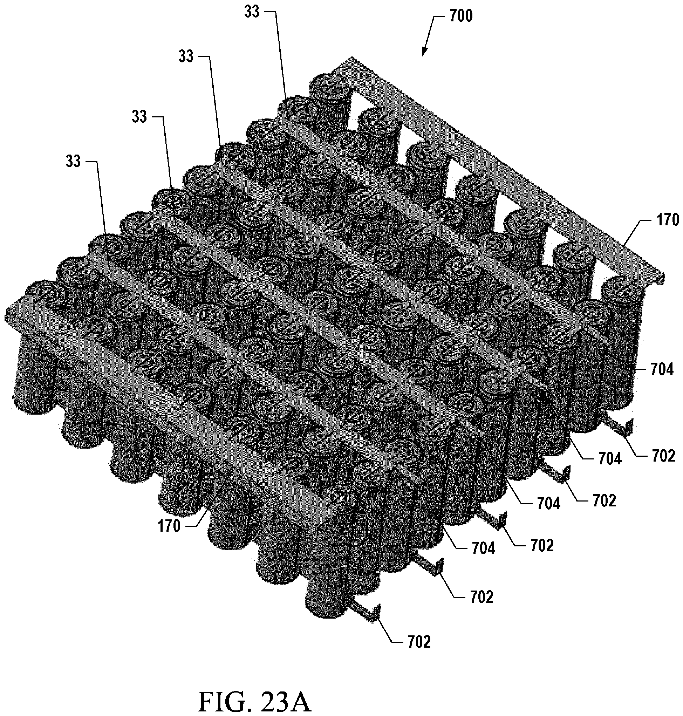

As mentioned above, the battery pack includes a plurality of individual cells, and the battery cells are placed in the above-discussed cell retainer. In order to achieve sufficient power, cells are organized and interconnected (e.g., in a series of series and/or parallel connections) to group the cells in a manner that achieves desired characteristics. The cells are connected to connectors 33 which connect the cells in parallel and in series as is discussed in more depth below with regard to Figures 7-9. The cells are bounded by end connectors 170 (Figure 23A) at the end of the series of rows. The end rows may be connected to a load (e.g., a power tool) to transmit power from the battery pack to the load. An example of such end connector is through the use of an electrically symmetrical battery cell connector, as is discussed below.

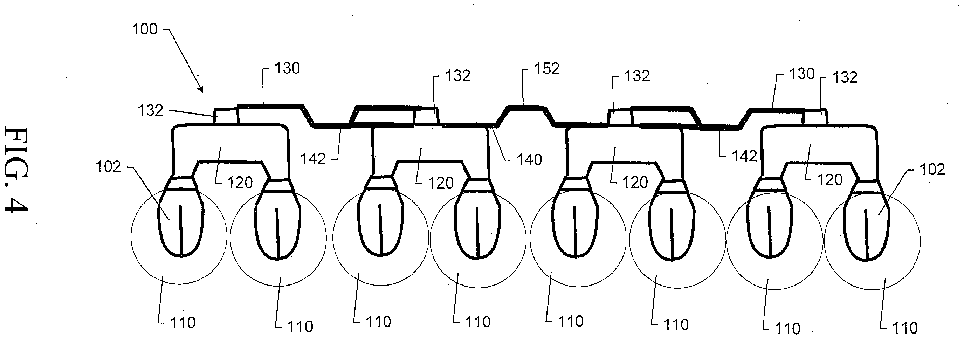

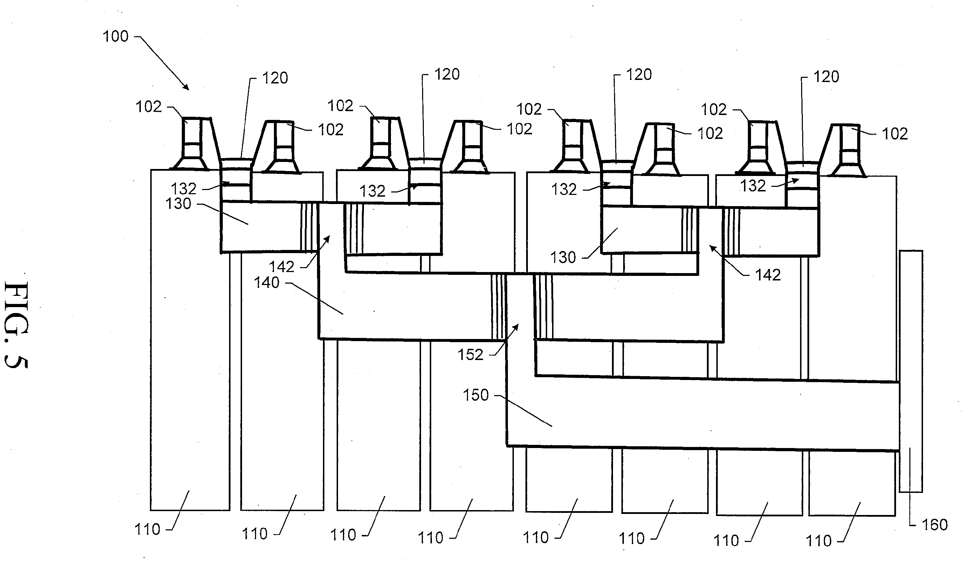

FIG. 4 illustrates a top view of a cell connector assembly 100 of an example embodiment and FIG. 5 illustrates a side view of the cell connector assembly 100 of FIG. 4. The cell connector assembly 100 of FIGS. 4 and 5 provides electrical symmetry, for example, by providing a tree-like structure including a plurality of arms assembled to provide an equivalent effective length of the material used to electrically couple each cell (or group of cells) connected in parallel by the cell connector assembly 100 to a common output. Since the effective length of the material used to couple each cell is the same, given a relatively constant resistivity of the material, the resistance value of the cell connector assembly 100 as seen by each cell 110 may be substantially equal. In an example embodiment, a plurality of terminal connectors 102 may be disposed to connect to corresponding individual ones of the cells 110 of the battery pack to each other via the cell connector assembly 100. Each of the terminal connectors 102 may be welded, clamped, bolted, soldered or otherwise fastened to the terminals of each respective one of the cells 110.

In an example embodiment, any number of cells (or groups of cells) could be included in a battery pack to which the cell connector assembly 100 is connected. As indicated above, another cell connector assembly may also connect to the negative terminals of the cells. For any cell connector assembly produced according to an example embodiment, the cell connector assembly may be configured such that the length of material of the cell connector assembly that is encountered by current supplied from a cell to be delivered to a load (or PCB) may be substantially equal.

In example embodiments where *n* number of cells (or groups of cells) are connected by the cell connector assembly 100, and *n* is equal to the number 2 raised to a power *m* (e.g., *n*=2*^{m}*), then a way to achieve symmetry may include dividing the *n* number of cells into pairs. The pairs may then further be divided into pairs until only one pair results. In doing so, there may be *m* different levels defined in the tree-like structure and connecting pairs at each respective level may include arms (or members) of equal length as is shown in FIGS. 4 and 5. In this regard, for example, the eight cells 110 (or *n*=8, which is 2³ such that *m*=3) of FIGS. 4 and 5 may be divided into four pairs of cells in which each pair of cells is connected to each other by a corresponding first level arm 120. The four first level arms 120 of FIGS. 4 and 5 (e.g., one for each pair of cells) are each of substantially the same length as the other first level arms 120 and either have identical width, height, and material content or identical variations in width, height, and material content as the other first level arms 120. Thus, four pairs of cells each include a corresponding first level arm 120 interconnecting the cells of the respective pairs of cells. The first level arms 120 are then paired and the pairs (which may include adjacent cell pairs) may be interconnected via second level arms 130 that all have the same length as the other second level arms 130 and either have identical width, height, and material content or identical variations in width, height, and material content as the other second level arms 130. Notably, although the first level arms 120 may all have the same length, and the second level arms 130 may all have the same lengths, the length of the first level arms 120 need not necessarily be the same as the length of the second level arms 130. In an example embodiment, a distance from each cell 110 to a tapping point 132 for the second level arms 130 off of the first level arms 120 may be substantially equal. In this regard, the second level arms 130 may connect to the first level arms 120 at a point on the first level arms 120 that is half way between the cells 110 connected by the first level arms 120.

In the example of FIGS. 4 and 5, there are two second level arms 130. The two second level arms 130 may then be interconnected via a third level arm 140. The third level arm 140 may connect to each of the second level arms 130 at a tapping point 142 that is substantially half way along the length of the second level arms 130 (e.g., half way between the tapping points 132 at the respective ends of the second level arms 130). A common arm 150 may then connect to the third level arm 140 at a tapping point 152 that is substantially half way along the length of the third level arm 140 (e.g., half way between the tapping points 142 at the respective ends of the third level arms 140).

Accordingly, *n* number of cells where *n*=2*^{m}*, can be interconnected via *m* number of levels of arms (not counting the common arm), where arms at each level are of the same length as other arms in the same level and a first level of arms connects pairs of cells while every subsequent level of arms connects a pair of higher level arms together by connection at a tapping point that is substantially half way along the length of the higher level arms. A common arm 150 (or common output) may then tap into the last level arm at a point half way along the length of the last level arm to combine currents from all other levels into a combined output. Said another way, the cell connector assembly 100 is formed into a tree-like structure that includes m number of splits along its length, each split creating two branches of equal length.

This structure makes the length of material encountered between each cell 110 (or group of cells) and a load (e.g., PCB 160) the same without regard to the physical distance between the cell 110 and the PCB 160. Accordingly, the resistances along the paths between each cell 110 (or group of cells) and the load (e.g., PCB 160) are identical assuming identical variations of cross section and material along the paths. To illustrate this point, note that the entirety of the length of the cell connector assembly 100 from the perspective of the farthest distant cell (relative to the PCB 160) is the sum of component parts including distance A (from the farthest distant cell to its tapping point 132 to its second level arm 130), distance B (from its tapping point 132 to the second level arm 130 to its tapping point 142 to its third level arm 140), distance C (from its tapping point 142 to the tapping point 152 to the common arm 150), and distance D (the length of the common arm 150). Meanwhile, the entirety of the length of the cell connector assembly 100 from the perspective of the closest cell (relative to the PCB 160) is the sum of component parts including distance A' (from the closest cell to its tapping point 132 to its second level arm 130), distance B' (from its tapping point 132 to the second level arm 130 to its tapping point 142 to its third level arm 140), distance C' (from its tapping point 142 to the tapping point 152 to the common arm 150), and distance D (the length of the common arm 150). The sum of A, B, C and D is equal to the sum of A', B', C' and D since A=A', B=B' and C=C'. Thus, from the perspective of each and every cell, the length of the cell connector assembly 100 as current travels from the cells to the PCB 160 is the same by virtue of the fact that a length of each component portion of the arms of the tree-like structure used to interconnect the cells is the same.

In the example of FIGS. 4 and 5, the first level arms 120 are disposed over a top portion of the cells 110, while remaining portions of the cell connector assembly 100 are disposed proximate to a side of the cells 110. Thus, for example, one or more of the levels of arms may be disposed such that a substantial portion of the corresponding arms are disposed parallel to a first plane, and one or more other levels of arms of the cell connector assembly may be disposed parallel to a second plane that is substantially perpendicular to the first plane. However, all arms could lie in a same plane in other example embodiments. Moreover, a longitudinal length of each of the arms (or a substantial portion thereof) shown in FIGS. 4 and 5 lies substantially parallel to each other.

Although it is not necessary, in some embodiments, a width and/or thickness of each subsequent level of arms may be increased, as illustrated in the example embodiment of FIGS. 4 and 5. In other words, a cross sectional area of at least one level of arms may be different than a cross sectional area of an adjacent level of arms. Increasing the width and/or thickness of each level of arms may cause a corresponding decrease in resistivity. Given that the currents flowing through each arm of the same level are substantially equal, but currents at subsequent levels are added, the current through each subsequent level is higher. By decreasing the resistivity, it may be possible to produce less heat in subsequent levels of arms even though larger currents pass therethrough. Thus, for example, the first level arms 120 may be thinner and/or narrower than the second level arms 130, the second level arms 130 may be thinner and/or narrower than the third level arms 140, and/or the third level arms 140 may be thinner and/or narrower than the common arm 150. However, such a structure is not required, and may not be desired in some situations.

It should be noted that the example of FIGS. 4 and 5 provides a relatively elegant structure for a cell connector assembly 100 that effectively has identifiable paths of conduction to the load (e.g., PCB 160) from the perspective of each cell (or cell group) that is connected thereby. In this regard, the common arm 150 connects to an arm that connects two lower level arms, and each of the two lower level arms connects to two lowest level arms that connect a pair of cells, where the locations for tapping into each arm to connect it to a subsequently higher level arm is at a halfway point along a length of the arm. Thus, precise distance calculations need not necessarily be performed to determine where to tap and how long to make each respective arm. However, example embodiments could also be practiced with other numbers of cells (or groups of cells) that do not evenly divide into pairs of cells at all subsequent levels after the level that interfaces with the common arm. Calculations could be performed in such example embodiments to provide tap points in locations that ultimately make the cell connector assembly have the same length from the perspective of each cell (or cell group).

In an example embodiment, each of the arms of the cell connector assembly 100 may be a portion of a single, unitary assembly. Moreover, the arms (either of the same level or of different levels) may be formed substantially simultaneously in a single stamping process or molding process. However, in other example embodiments, the arms may be formed separately by any suitable method, and the arms may thereafter be joined together to form the cell connector assembly 100. In some embodiments, the arms may be welded, bolted, clamped or affixed via any suitable method. Resistance welding, laser welding, or any of a number of other welding techniques may be employed to form the cell connector assembly 100.

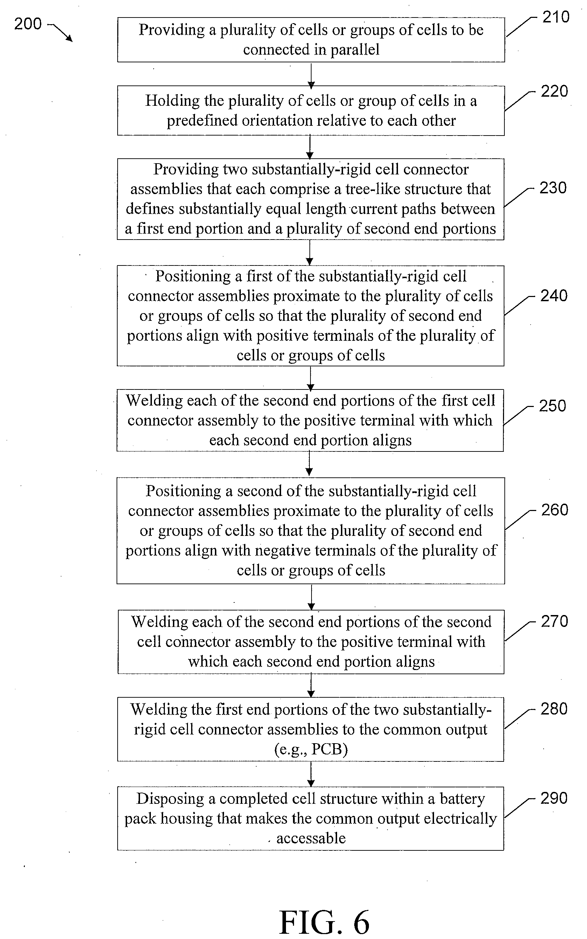

FIG. 6 illustrates a method 200 of making a battery pack in accordance with an example embodiment. It should be appreciated that some embodiments of the invention may make manufacturing a battery pack easier when several cells or groups of cells need to be connected in parallel by current paths having substantially equal resistance. In this regard, a method of manufacturing a battery pack may include providing a plurality of cells or groups of cells to be connected in parallel at operation 210. As described above, in some embodiments of the invention, the battery pack includes a plurality of individual cells connected in parallel using the cell connector assembly. In other embodiments, the battery pack includes a plurality of groups of cells connected in parallel using the cell connector assembly, where each group of cell includes a plurality of cells connected in series. In such embodiments, the operation 210 of providing a plurality of groups of cells may include an operation of connecting a plurality of cells in each group in series. This operation may involve, for example, lining up the cells in a line and using individual connectors (e.g., pieces of metallic tape) to connect the negative terminal of one cell to the positive terminal of the adjacent cell down the line. In one embodiment with the positive and negative terminals are on opposing ends of each cell, the cells in each line may be oriented with opposite polarities so that the positive terminal of one cell is next to the negative terminal of the adjacent cell. In some embodiments, robotic arms position the cell connectors so that they bridge the positive and negative terminals of adjacent cells and then spot weld the connectors to the terminals.

The method 200 may further include holding the plurality of cells or groups of cells in a predefined orientation relative to each other in operation 220. For example, in one embodiment, spacers are used to hold each cell an appropriate distance from adjacent cells and align the cells in rows and/or columns so that the positive and negative terminals are aligned for a series or parallel connection as the case may be. In some embodiments where groups of series connected cells are connected in parallel, the cells may be placed in spacers prior to being connected in series. For example, in one embodiment, to prepare the cells for the parallel connection the cells or groups of cells may be positioned so that all of the positive terminals of each cell or group are aligned in a straight line and all of the negative terminals of each cell or group are aligned in a straight line.

The method 200 may further include an operation 230 of providing two substantially-rigid cell connector assemblies (such as those described above) that each comprise a tree-like structure that defines substantially equal length current paths between a first end portion and a plurality of second end portions. This operation may include manufacturing the cell connector assemblies by, for example, stamping the hierarchical tree-like structure from a metallic sheet and/or welding individual metallic conductors together to form the hierarchical tree-like structure. As recited in FIG. 5, the cell connector assemblies may be manufactured so as to be substantially-rigid at least to the point where they do not significantly lose their shape when picked up at a single point. In some embodiments the two cell connector assemblies provided in this operation may be similar in structure but not identical since one will connect the positive terminals of the cells or groups of cells and the other will connect the negative terminals of the cells or groups of cells. For example, depending on the relative positioning of the cells and the common output, the two cell connector assemblies may be mirror images of each other.

The method 200 may further include, in operation 240, positioning a first of the substantially-rigid cell connector assemblies proximate the plurality of cells or groups of cells so that the plurality of second end portions align with positive terminals of the plurality of cells or groups of cells. In some embodiments, this operation is performed robotically by selecting one cell connector assembly from a first group of cell connector assemblies and holding it against the cells so that the second end portions of the cell connector assembly aligns with the positive terminals to be connected in parallel. Here, embodiments of the invention where the cell connector assembly is substantially-rigid may be advantageous since the cell connector assembly will not significantly deform when picked-up and held by a robotic arm at, perhaps, a single contact point. Furthermore, if the cells are properly positioned in operation 220, then all of the second end portions of the cell connector assembly should naturally align with the terminals when at least two second end portions are aligned with the appropriate two terminals or when the any two points on the cell connector assembly are otherwise positioned appropriately in space relative to the plurality of cells.

The method 200 may then include, in operation 250, welding (or fastening in another way) each of the second end portions of the first cell connector assembly to the positive terminal with which each second end portion aligns. In some embodiments, the welding is completed robotically via a robotic spot welder that, now that the cell connector assembly is held so that all of the second end portions are aligned with the appropriate terminals, can quickly spot weld all of the connections by moving to the appropriate points in space and welding the connector to the terminal down the line of the second end portions.

Operations 260 and 270 are similar to operations 240 and 250, but are completed for the negative terminals to be connected in parallel. As such, the cell connector assembly may be taken from a different group since, in some embodiments, the cell connector assembly for the negative terminals may be a mirror image or otherwise slightly different than the cell connector assembly used for the positive terminals, while still having the same general tree-like current path structure.

The method 20 may also include operation 280 where the first end portions of the two substantially-rigid cell connector assemblies are each welded or otherwise fastened to the common output, which may be a PCB. As illustrated by operation 290, the completed cell structure may then be disposed within a battery pack housing, where the hosing makes the common output electrically assessable. For example, a positive and a negative terminal may extend from the PCB through openings in the housing wall.

It will be appreciated that method 200 illustrates an example method of making a battery pack according to an embodiment of the invention. It should also be appreciated that other methods may also be used and that some steps in the method may be completed in a different order or simultaneously. For example, operations 260 and 270 could be performed before or simultaneously with operations 240 and 250.

### III. BATTERY PACK CELL CONNECTOR WITH INTERNAL FUSE

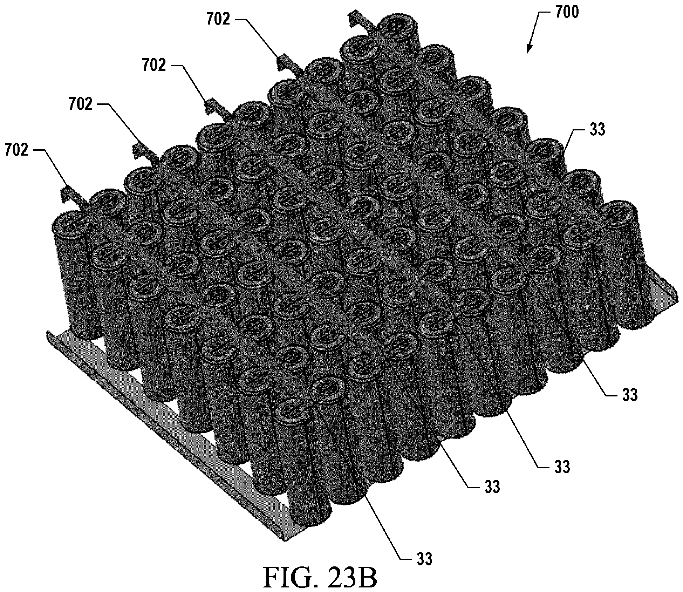

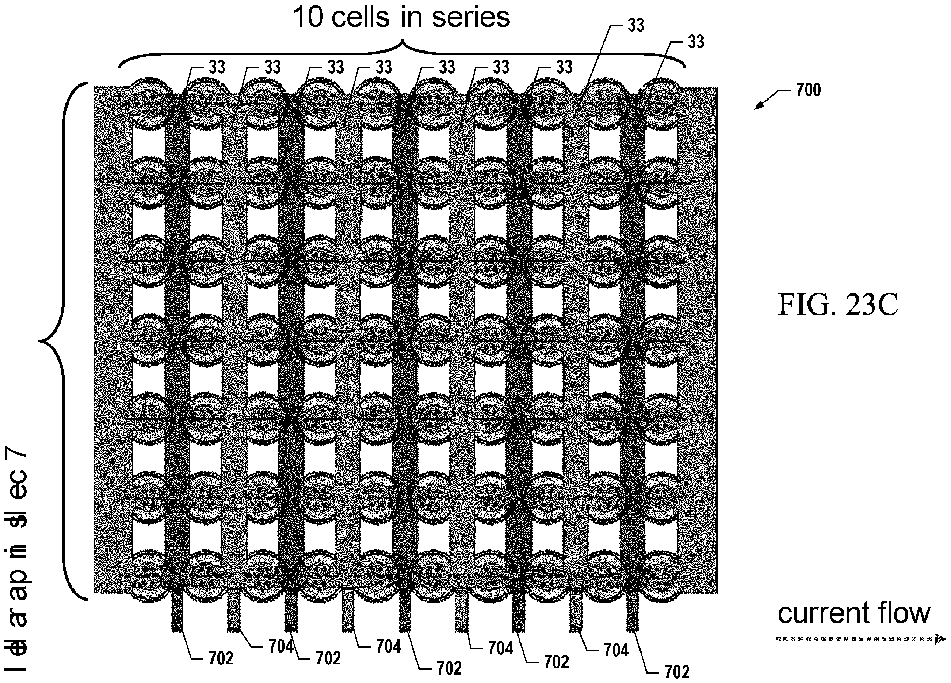

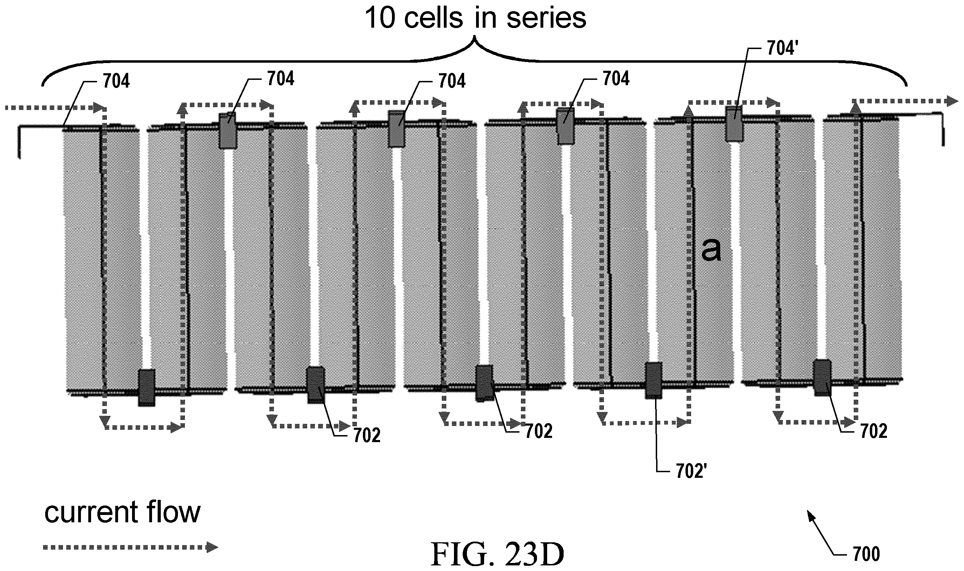

It should be understood that the cells may be electrically connected together by cell connectors 33, as mentioned above and illustrated by FIG. 2 (and later in Figure 23). Such cell connector may further include internal fuses as is discussed below.

In an example embodiment, a cell connector connects nodes of each battery cell and, in some embodiments, is shaped so that a portion of the cell connector functions as a fuse for each cell (an "internal" fuse). In this regard, when one or more battery cells deteriorate, a high amount of current is disposed on one of the internal fuses, which causes the fuse to electrically disconnect the improperly-operating cell(s) from the other cell(s) in the battery system.

The battery pack is comprises of at least two rows of battery cells. As will be discussed below, each row includes a plurality of battery cells with the terminals all aligned so the battery cells in a single row have the same polarity.

Any amount of rows of battery cells may be employed to form the battery pack. For ease of illustration in Figure 7, only two rows of battery cells are illustrated. However, it should be understood that any number of rows, such as four or five rows, of battery cells may be used. In some embodiments, each row of battery cells comprises a plurality of cells positioned adjacent each other and electrically connected at a common terminal (e.g., all positive terminals of a row of battery cells are connected together).

A row of battery cells is then connected in series with another row of battery cells. In this regard, the battery connector has a pad 326 that may be welded, soldered, bolted, or otherwise electrically attached to the positive terminals of each of the battery cells 322 of a first row of battery cells together. As such, all of the positive terminals of the first row of battery cells are electrically connected together. The battery connector then is similarly attached to the negative terminals of a second row of battery cells such that the negative terminals of the second row of battery cells are electrically connected together. The battery connector then operates as a single electrical node that electrically connects the positive terminals of the first row of battery cells with the negative terminals of the second battery cells together.

As mentioned above, the first row of battery cells may be positioned such that the first row battery cells are each aligned in a line so that each the cells' positive terminals are each adjacent to one another (and thus, the cells all are aligned to have the same polarity). Likewise, the second row of battery cells may be positioned such that the second row battery cells are each aligned in a line so that the negative terminals are each adjacent to one another (and thus, the cells all are aligned to have the same polarity). This facilitates connecting the battery connector to the first and second row of battery cells.

In the illustrated embodiment, the battery connector 324 is a unitary conductor, such as single unitary piece of metal (e.g., steel, nickel, copper, various alloys, etc.), and allows for a connection to a load (not shown).

Each battery cell 322 transmits power from the positive terminal of a battery cell 322 to pad 326 of the cell connector 324 and the power then may be transmitted to a common central portion 18 of the cell connector 324 which acts as a common node for the battery cells 322. In this regard, the battery cells 322 are connected to each other in parallel. The common central portion 328 can then be connected to a load.

In certain situations, an "external" fuse (not shown), which may be located between the battery system 320 and a load (e.g., between the battery system and one of the battery pack terminals), may protect the battery pack and the battery cells 322 contained therein in the event of short circuits occurring in circuits that are external to the battery system 320 (e.g., circuits in the battery-powered device). For example, the external fuse may be connected between the battery pack 10 and the load so that the battery pack 10 may be disconnected or open-circuited with the load. This protects both the battery pack 10 and the load from any external short circuits. However, the external fuse will not protect the battery pack 10 from thermal runaway caused by internal short circuits, overloading or mechanical damaging. Further, if one battery cell 322 is damaged or thermally unstable, such cell 322 will impact the other cells and the thermal runaway cannot be stopped. To address the above issues, the battery system 320 described with reference to FIGS. 7 through 15 has internal fuses built into a connector 324 that connects a group of three or more cells 322 in parallel. Despite the internal fuses in this battery system 320, an external fuse (not shown) may still be used to protect against short circuits external to the battery system 320. In such embodiments, this external fuse may be configured to react to an external short circuit faster than the internal fuses in the connector 324 do, and the internal fuses in the connector 324 may be configured to react to an internal defect faster than the external fuse does.

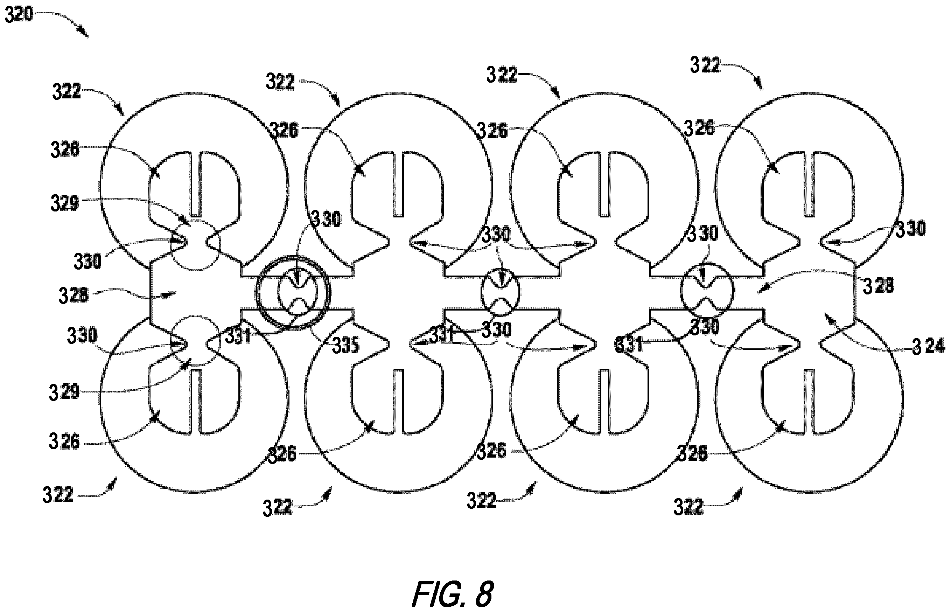

FIGS. 7 and 8 illustrate perspective and top views, respectively, of a battery system 320 including a cell connector 324 according to an example embodiment of the present invention. The cell connector 324 connects any number of battery cells 322 in parallel and in series according to one embodiment. For example, as illustrated in FIGS. 7-8, four parallel-connected battery cells of one row are connected in series to four parallel-connected battery cells of a second row of cells. The cells 322 may be nickel-metal hydride, nickel-cadmium, lithium-ion, or other any other suitable type of battery cell of any voltage. In some cases, nominal cell voltages of each cell are in the range of about IV to about 4V. The cells 322 in this battery system 320 may be individual cells connected in series or each comprise a plurality of cells connected in parallel a row configuration as illustrated. In other words, in some embodiments the battery connector 324 connects groups of parallel-connected cells in series as opposed to individual cells. According to some embodiments, the cell connector 324 is composed of a material which has an internal resistance, such as steel, nickel, aluminum, copper, zinc, various alloys, other metals, and/or metal plating or any combination thereof.

The cell connector 324 includes a central body portion 328 and a plurality of pads 26. The number of pads 326 included on the cell connector 324 is equal to the amount of battery cells 322 included in the battery system 320. Each pad 326 is connected to a positive terminal of each respective battery cell 322 by welds (e.g., spot welds), solder joints, bolts, fasteners, adhesives, integral formation, and/or any other coupling method. In one embodiment, each pad 326 is welded to each respective battery cell terminal. Such connection allows each battery cell 322 to transfer electrical power from the battery cells 322 to the cell connector 324 and vice versa.

According to some embodiments, the cell connector 324 is a single unitary piece of metal (or other conductive material) such that the central body portion 328 and the pads 326 are integrally formed together. For example, as illustrated in the exemplary embodiments of FIGS. 7 and 8, the cell connector 324 may be formed from a single piece of metal (e.g., steel), whereby the steel piece is shaped to form pads 26 and narrowing portions (fuses 330).

As illustrated in FIGS. 8-10, the cell connector 324 includes portions that have a narrowing cross-section. These portions are referred to herein as fuses 330 and are configured to burn out when a certain amount of current flows therethrough for too great an amount of time. The fuses 330 can be arranged in various configurations as will now be discussed with reference to FIGS. 8-10. As illustrated, in some embodiments of the invention, the connector 324 is formed so that a fuse 330 is at a position 329 located between each of the battery cells 322 so that each cell can be electrically isolated from the rest of the cells if it has a defect and supplies or draws too much current. In particular, the connector 324 illustrated in of FIG. 8 is formed so that a fuse 330 is at a position 329 located between each pad 326 and the central body portion 328 and also at position 331 in the central body portion 328 between each pair of cells 322 ("between" meaning electrically between, not necessarily physically between). This can be repeated for the rest of the cells 322 as illustrated in Figure 8 (although the positions 29 are not explicitly shown on each set of cells for purpose of clarity).

As mentioned above and as illustrated in Figure 8, some embodiments of the connector 324 have fuses 330 at position 331 located between groups of cells (e.g., between each pair of cells) so that at least some groups of cells can be electrically isolated from others in the event that a particular group of cells has one or more defects that combine to cause the group to supply or draw too much current.

There are different configurations of fuses at positions 329 and 331, which are each discussed below.

In some embodiments, as illustrated in Figure 8, fuses 330 are located at both positions 329 and 331 for each cell or pair of cells so that the pairs of cells are isolatable and each cell 322 individually is isolatable. In some embodiments, there are fuses 330 located at some of positions 329 and 331 but there may not be a fuse at every position of 329 or 331 so that there is at least one fuse between two pairs of cells 322 (position 331) and at least one fuse 330 between the pad 326 and the central body portion 328 (position 329).

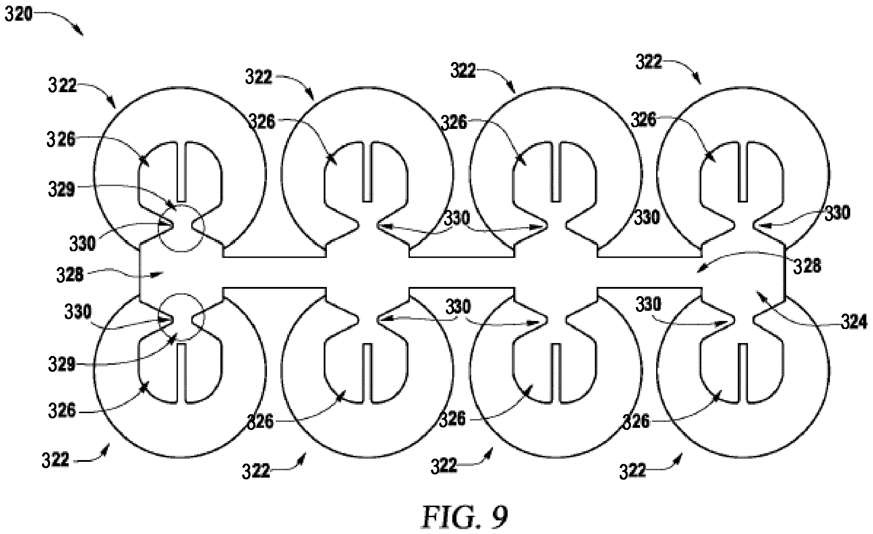

According to some other embodiments, the fuses 330 may only be at positions between the pads 326 and the central body portion 328 (as illustrated by positions 329 in Figure 9), and thus the fuses may not be located at other areas on the connector 324, as illustrated in Figure 9. In these embodiments, fuses 330 are only located at position 329 proximate to one or more cells 322 so that there are not any fuses 330 at position 31 along the central body portion 328 between any of the pair of cells.

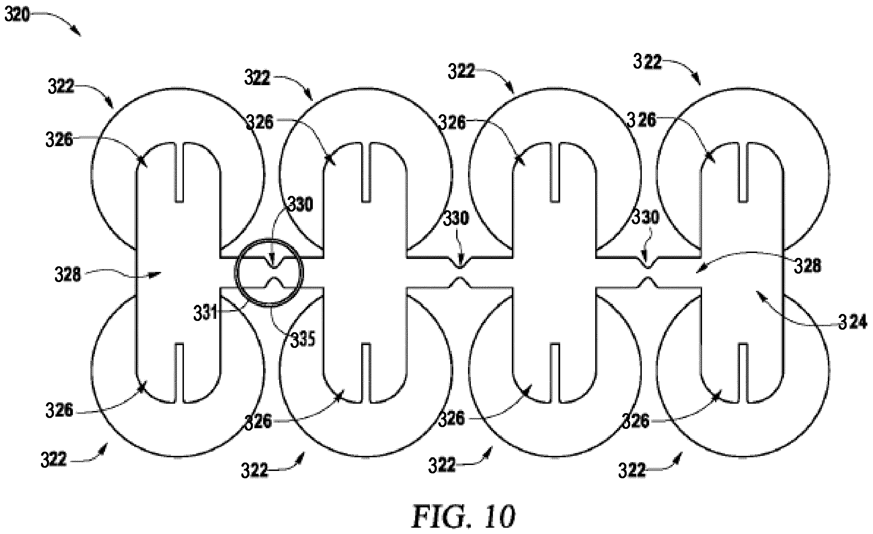

In yet some other embodiments, as exemplified by Figure 10, fuses 330 are only located at position 331 between one or more pair of cells along the central body portion 328 so that there are no fuses at position 329 proximate to each cell 322. Figure 10 therefore illustrates a fuse (and three in total) located between each of the four pairs of cells 322. This allows pairs of cells 322 to be serially connected with each other with fuses 330 disposed between each pair of cells 322. The fuses 330 are described below with respect to the illustration of FIGS. 9A-9C.

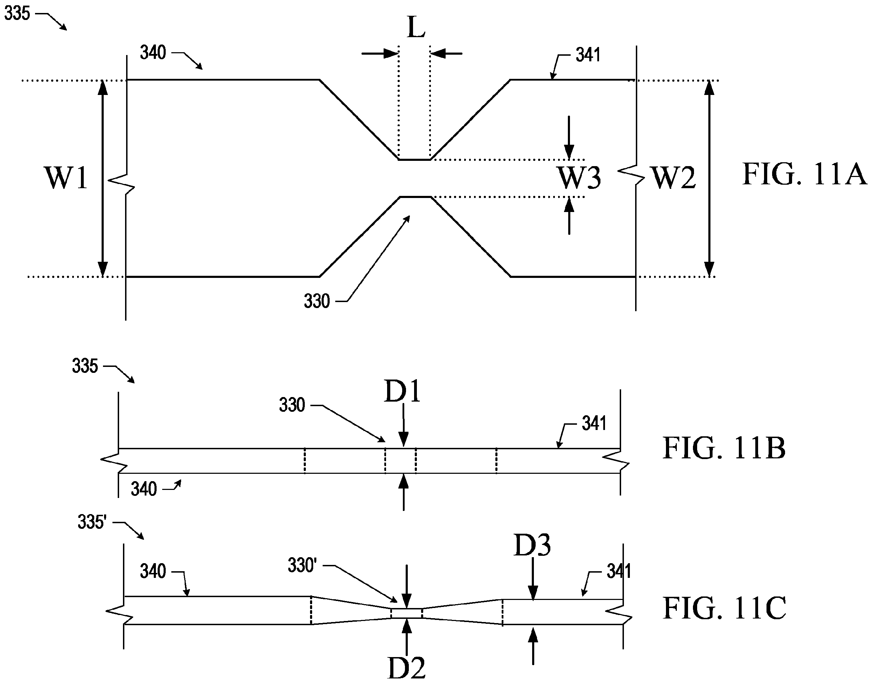

To illustrate the fuses 330 themselves, FIG. 11A and FIGS. 11B and 11C illustrate top and side perspective views, respectively, of a portion 335 of the cell connector 324 of Figure 7, which includes a first body portion 340, a second body portion 341, and a fuse 330 according to some embodiments. As illustrated, the first body portion 340 and the second body portion 341 have a first width W1 and a second width W2, respectively, and narrow therebetween to a smaller third width W3 at the fuse 330. The fuse's length L and cross-sectional area A (W3 x the depth D of the connector 324 at the fuse 330) are set so that the fuse 330 melts or "burns out" once the current through the fuse 330 reaches a threshold, as will be discussed more later. The cross-sectional area includes a depth D and width W3. The fuse's cross-sectional area A and length L are determined based on the type of material the fuse 330 is composed of as well as the desired current threshold and the desired burnout time for one or more current levels. More specifically, the melting time is directly proportional to the fuse's resistance R, while the fuse's resistance R is inversely proportional to the fuse's cross-sectional area A and directly proportional to the fuse's length L and material density ρ (i.e., R=ρ^{*}L/A). For example, the fuse's cross-sectional area may range from 1.5 mm² - 2 mm², the melting time may range from 3 seconds to 115 seconds, and the burnout current may range from 10 amps to 70 amps. Of course any other range for these parameters is also possible. The fuse material used may be steel, nickel, copper, various alloys, or any other material which is configured to break down at too high a current.

In addition to (or as an alternative to) narrowing the width W of the connector 324 to create the fuse 330, one may vary the depth D of the connector to create the fuse 330 and set the burn out sensitivity of the fuse 330. In some embodiments, as illustrated in the side view of an exemplary cell connector portion 335 of FIG. 11B, the depth D1 of the fuse 330 may be the same as the depth of the first and second body portions 40, 41 of the cell connector 324. In fact, in some embodiments the cell connector 324 is cut or otherwise formed from a metallic sheet having a uniform depth throughout and, thus, the depth D1 of all fuses 330 may be equal to each other and equal to the depth of the connector 324 in general. However, in other embodiments such as the illustrated embodiment of FIG. 11C, the connector's depth narrows in the area of the fuse such that depth D2 of the fuse 330 is less than the depth D3 of the first and second body portions 340, 341 of the illustrated cell connector portion 335'. Assuming that depth D2 is less than depth D1, the fuse 330' of cell connector portion 335' illustrated in FIG. 11C will burn out with less current than the fuse 330 of FIG. 11B. Regardless, by varying the length, width, and/or depth of the fuse (as well as the materials used for the fuse), the manufacturer can make the fuse more or less sensitive to thermal runaway. In this regard, as the cross-sectional area of the fuse 330 is decreased, the fuse 330 will burn out with less current and/or in a shorter amount of time. Conversely, as the cross-sectional area of the fuse 330 is increased, the fuse 330 has a higher tolerance for a greater amount of current and/or will take a longer amount of time to burn out.

It should be noted that different cross-sectional areas may be created by different shapes and dimensions and the present invention should not be limited to the illustrative examples provided herein. Furthermore, although forming the connector 324 from a single unitary piece of material may have certain benefits, other embodiments of the connector may be formed by joining a plurality of conductors and fuses together. Likewise, although a substantially-rigid planar connector having uniform thickness may have certain benefits, other embodiments of the connector may be formed into other shapes.

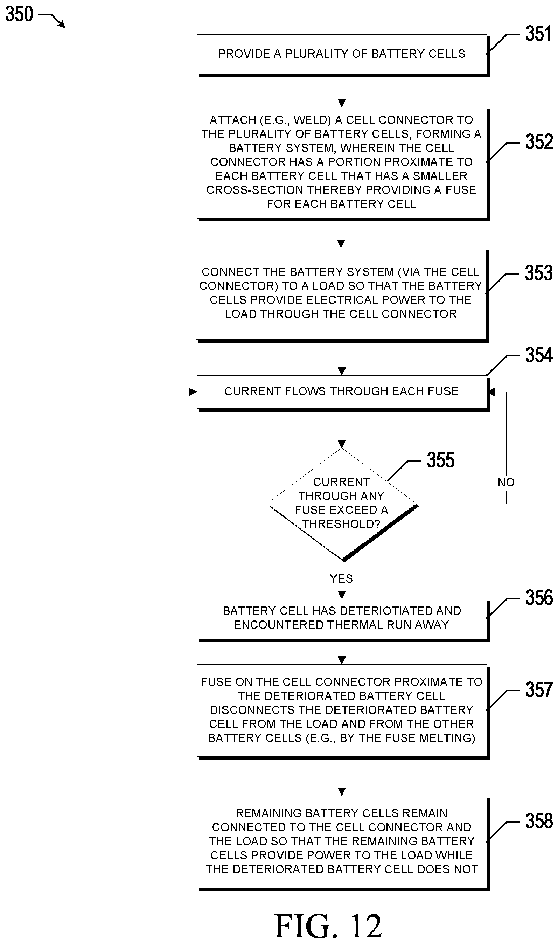

FIG. 12 illustrates a method 350 of protecting a battery system from thermal runaway according to some embodiments. In block 351, a plurality of battery cells are provided. For example, as previously presented in FIGS. 7-8, the amount of battery cells may be eight, and the number of cell rows may be two. However, any amount of battery cells and any number of cell rows may be provided.

In block 352, a cell connector as discussed herein is attached to terminals of the plurality of battery cells, thereby forming a battery system. As previously discussed, the cell connector may be connected to the battery cells by welding (or other method) the pads of the cell connector to the output terminals of the battery cells. The cell connector includes a fuse portion adjacent to each battery cell, as will be discussed later.

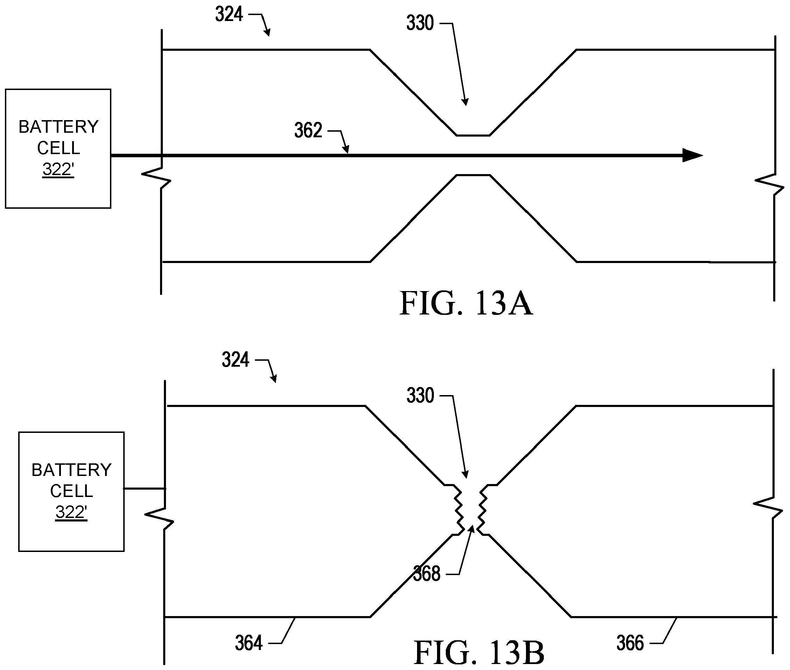

In block 353, the battery system is connected to a load so that the battery cells may provide electrical power to the load through an end cell connector. The end cell connector may be a connector that is attached to the last row of battery cells. As such, end connectors are bound at each end of the series of rows. In this regard, the load is connected to an end cell connector so that electrical power is transmitted from each battery cell through the cell connector to the load. As such, as illustrated in FIG. 13A, current flows from a battery cell 322' through a fuse 330 of the cell connector 324 to another battery or to the end connector. This occurs for each battery cell connected with the cell connector 324 such that the current flows from the positive terminal of the cells of one row to the negative terminals of the cells of the second row. The current then travels through each successive row until the current reaches the end cell connector, which is in turn connected to a load.

In block 535 of FIG. 12, if the current does not exceed a threshold, the method 350 continues back to block 354 where the current is allowed to continue to flow from the battery cell 322' to another cell or to the load. Otherwise, if the current 362 through the fuse 330 exceeds a threshold for a certain amount of time, the battery cell 322' is not working properly and thermal runaway has been determined to have occurred (block 356).

In block 357, when thermal runaway occurs because the current has exceeded the threshold, the fuse 330 burns out, melts, or otherwise disconnects the battery cell 322' from the load, as illustrated in FIGS. 13B. This occurs because the fuse 330 heats up due to a combination of internal resistance of the fuse material and the amount of current flowing through the fuse. The fuse 330 electrically disconnects the deteriorated battery cell 322' by separating a cell connector first body portion 364 that is electrically attached to the deteriorated battery cell 322' from a cell connector second body portion 366 that is electrically connected with another battery cell or a load. It is noted that the fuse 340 is disposed between the first and second body portions 364, 366 which have larger cross-sectional areas tapering down to smaller cross-sectional area of the fuse 330. Nonetheless, when the fuse has been broken or burned out (FIG. 13B), the first body portion 364 may still be electrically attached to the deteriorated battery cell 322' via the cell connector pad that is connected to the deteriorated battery cell 322'. However, a space 368 is created between the first and second body portions 364, 366 creating an open circuit between the deteriorated battery cell 322' and the other battery cells 322 and/or the load. This protects the load and/or the other battery cells 322 from excessive current provided from the deteriorated battery cell 322'.

In block 358 of FIG. 12, the remaining battery cells 322 stay connected to the cell connector 324 and/or the load so that the remaining battery cells 322 continue to provide power to the load while the deteriorated battery cell 322' does not.

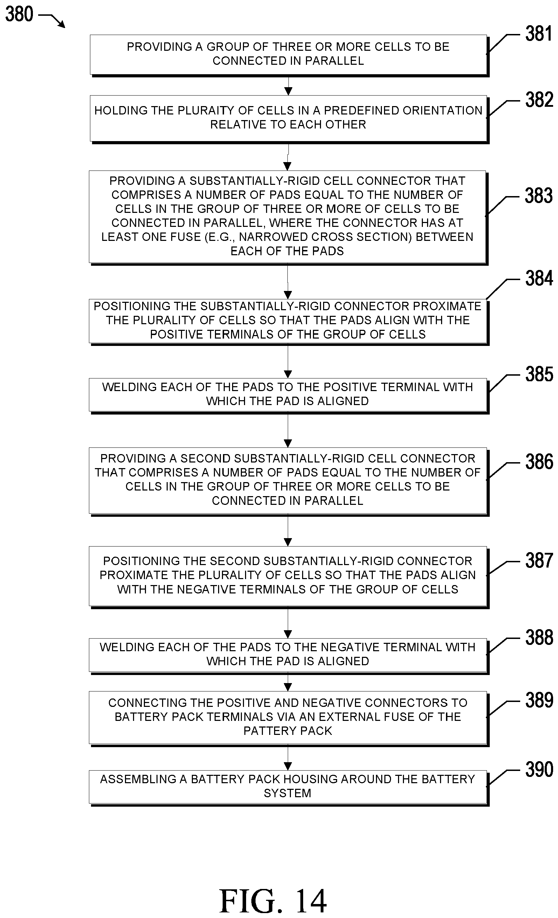

FIG. 14 illustrates a method 380 of making a battery pack in accordance with an example embodiment of the invention. It should be appreciated that some embodiments of the invention may make manufacturing a battery pack easier when several cells or groups of cells need to be connected in parallel with fuses located therebetween. In this regard, a method of manufacturing a battery pack may include providing a plurality of cells (or groups of cells) to be connected together at operation 381. As described above, in some embodiments of the invention, the battery pack includes a plurality of rows of parallel-connected cells, where each of these rows is connected in series using the cell connector assembly. For example, a first row of cells (e.g., two or more parallel-connected cells) may be connected in series with a second row of cells (e.g., another set of two or more parallel-connected cells). Additional rows may be added to have any amount of rows of parallel-connected cells such that the rows are serially-connected together.

The method 380 may further include holding the plurality of cells or groups of cells in a predefined orientation relative to each other in operation 382. For example, in one embodiment, spacers are used to hold each cell an appropriate distance from adjacent cells and align the cells in rows and/or columns so that the positive terminals of the first row of cells are aligned with the negative terminals of the second row of cells.

The method 380 may further include an operation 383 of providing a substantially-rigid cell connector (such as described above) that comprises a number of pads equal to the number of cells of the first and second rows to be connected together, where the connector has at least one fuse (e.g., narrowed cross section) between two of the pads. This operation may include manufacturing the cell connector assemblies by, for example, stamping the structure from a metallic sheet and/or fastening individual metallic conductors together to form the structure. The cell connector may be manufactured so as to be substantially-rigid at least to the point where it does not significantly lose its shape when picked up at a single point.

The method 380 may further include, in operation 384, positioning the substantially-rigid cell connector proximate the plurality of cells or groups of cells so that the plurality of pads align with positive terminals of the first row of cells and the negative terminals of the second row of cells. This allows the first row of cells to be placed in series with the second row of cells. In some embodiments, this operation is performed robotically by selecting one cell connector from a first group of cell connectors and holding it against the cells so that the pad portions of the cell connector align with the respective terminals to be connected. Here, embodiments of the invention where the cell connector is substantially-rigid may be advantageous since the cell connector will not significantly deform when picked-up and held by a robotic arm at, perhaps, a single contact point. Furthermore, if the cells are properly positioned in operation 382, then all of the pad portions of the cell connector should naturally align with the terminals when at least two pad portions are aligned with the appropriate two terminals or when any two points on the cell connector are otherwise positioned appropriately in space relative to the plurality of cells.

The method 380 may then include, in operation 385, welding (or fastening in another way) each of the pad portions of the first cell connector to the terminal with which each pad portion aligns. In some embodiments, the welding is completed robotically via a robotic spot welder that, now that the cell connector is held so that all of the pad portions are aligned with the appropriate terminals, can quickly spot weld all of the connections by moving to the appropriate points in space and welding the connector to the terminal down the line of the pad portions.

Operations 386, 387, and 388 are similar to operations 383, 384, and 385, but are completed for the positive terminals of the second row of cells. This will allow the positive terminals of the second row of cells to be connected in parallel with each other. Additionally, the second row of cells may be connected in series to a third row of cells by connecting the positive terminals of the second row of cells to the negative terminals of the third row of cells, similar to connecting the first row of cells to the second row of cells discussed above. Any number of rows can be similarly added using another connector so that each parallel-connected cells of a row is attached in series with another row. Furthermore, a third connector may be connected to the negative terminals of the first row of cells to place the first row of cells in parallel with each other. This third connector may be an end connector and connect to a negative terminal of a load.

The method 380 may also include operation 389 where the end cell connectors are electrically connected, via an external fuse, to the positive and negative terminals of the battery pack, respectively. As mentioned above, the end cell connectors are the cell connectors that are at the beginning and end of the rows of cells connected in series.

As illustrated by operation 390, the completed cell structure may then be disposed within a battery pack housing, where the housing makes the common output electrically assessable. For example, a positive terminal and a negative terminal may extend from the through openings in the housing wall, and such terminals are to be connected to a load, as discussed below.

It will be appreciated that method 380 illustrates an example method of making a battery pack according to an embodiment of the invention. It should also be appreciated that other methods may also be used and that some steps in the method may be completed in a different order or simultaneously.

Thus, the cell connector, as discussed herein, may be a unitary piece of metal which has at least one internal fuse built into such piece of metal. As such, in one embodiment, no external fuse may be needed and the only fuse(s) used in the circuit are those which are integral with the cell connector as discussed herein. In another embodiment, the internal fuse of the cell connector may be used in conjunction with an external fuse to provide a backup or additional fuse(s).

FIGs. 23-24 illustrate embodiments of a battery pack according to various embodiments: FIGs. 23A-B illustrates top and bottom perspective views of a battery pack according to an example embodiment. FIG. 23C-D illustrates top and side views of the battery pack of FIG. 23A.

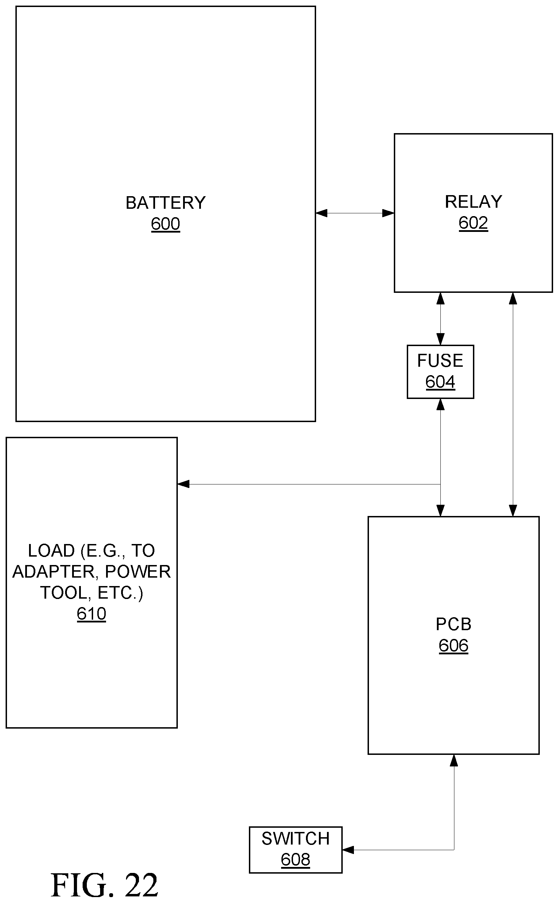

Referring first to FIG. 23, the battery pack 700 is substantially similar to the battery cells and electrode connector system discussed above in the system in FIG. 2A that is placed in battery pack 10. The cells are connected in parallel and series as discussed previously using electrode connectors 33 and end connectors 170. As illustrated in Figures 23C and 23D, current travels from one end connector 170 to the other end connector 170 along each respective column of cells. As shown in Figure 23D, a column of cells are shown and the current flow is shown. Tabs 702 extend from each electrode connector 33 on the bottom of the cells and tabs 704 extend from each electrode connector 33 on the top of the cells as illustrated in Figures 23A-B and 23D. The tabs 702, 704 are connected to a printed circuit board (such as PCB 606 of Figure 22) which is in turn connected to a processor and computer logic.

Figure 23D illustrates that voltage can be taken between a top tab 702 and an adjacent bottom tab 704 so that a voltage over a single cell can be determined. For example, the voltage of cell "a" in Figure 23D can be taken by measuring the voltage between tab 702' and tab 704'. This allows the user to determine when a single cell has deteriorated. To determine if the cell has deteriorated, the voltage measurement over the single cell will be reduced below a threshold, according to one embodiment. In some embodiments, the current along each column of cells may be determined. As such, when a cell has deteriorated, that cell pulls more current than properly functioning cells and thus, the deteriorated cell can be pinpointed based on current measurements in the columns to determine which column is pulling more current and based on voltage measurements on each row to determine which row has dropped in voltage. Based on determining which column is drawing more current and which row has a lower voltage, the cell in X row and Y column is the deteriorated cell according to an embodiment. According to another embodiment, the row where the cell is improperly functioning is determined based on the voltage level of the row taken from the tabs. If a row has a voltage lower than a predetermined threshold, then it is determined that that row has a cell that has been deteriorated.

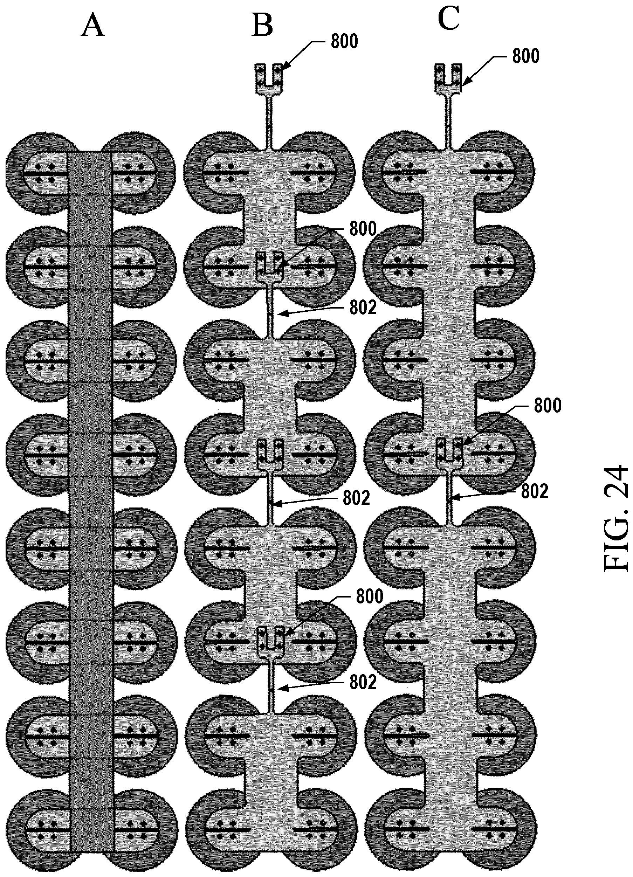

FIG. 24 illustrates a top view of three separate rows (i.e., A, B, and C) of battery cells according to some embodiments. Row "A" illustrates the cells as previously discussed in Figures 7-10 where a conductive tape connects the cells together. Row "B" illustrates four groups of four individually-connected cells. Each group is then connected to each other using a connector portion 800. Each connector portion 800 connects one group of four cells to another group of four cells so that each group of cells are connected together in parallel similar to each row of FIG. 23. Each connector portion 800 includes a fuse 802 similar to the fuses previously discussed with regard to FIGS. 7-13. The fuse 802 is accordingly configured to burn out if a predetermined amount of current travels therethrough thereby disconnecting one group of four cells to the other cells.

It should be understood that the group of cells may be any number of cells and need not e limited to the embodiment of Row "B" of four cells. For example, Row "C" illustrates that the row of cells may be six individually-connected cells instead of four cells. Additionally, it should be understood that any number of groups of cells could be connected using the connector portion 800.

### IV. BACKPACK BATTERY PACK

As discussed above, battery cells are electrically connected together using cell connectors. The battery pack has a positive terminal and a negative terminal for providing power to a power tool. The battery pack may be worn on the back of a person to carry the battery. Below is a discussion of the backpack to hold the battery.

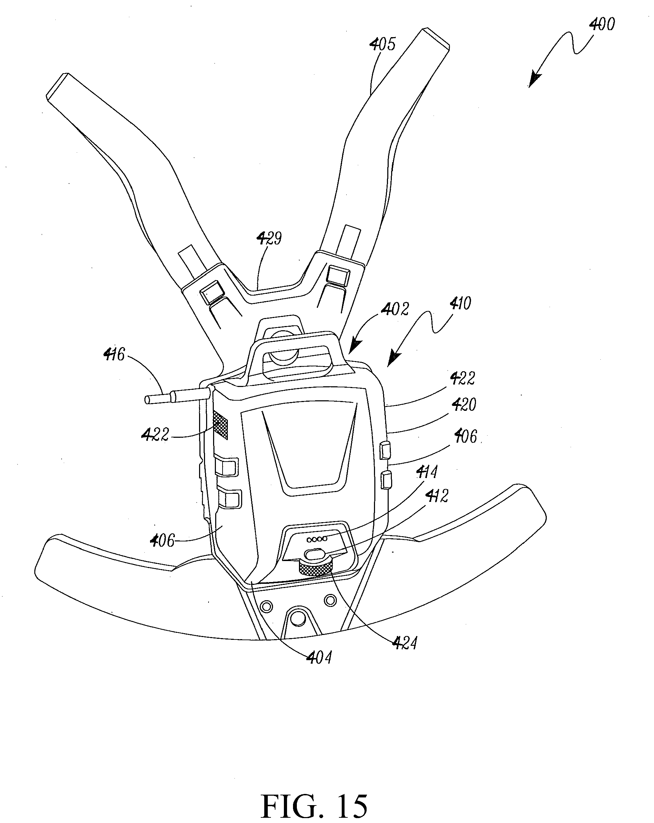

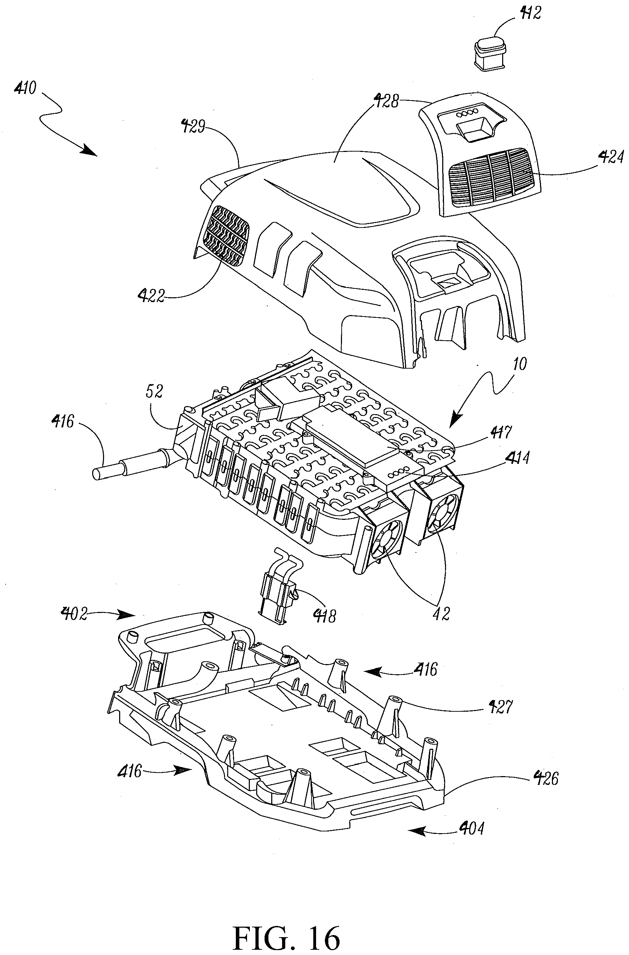

FIG. 15 illustrates the battery pack incorporated into a backpack battery 400 in accordance with an example embodiment, and FIG. 16 illustrates a partially exploded view of the backpack battery pack 410 according to an example embodiment. The backpack battery 400 is a battery pack configured to be worn on the user's back during operation. In an example embodiment, the backpack battery pack 410 may affixed to straps 405 or another harness that may be usable to attach the backpack battery 400 to the user's back. In some cases, the backpack battery pack 410 may be oriented such that an upper end 402 thereof is oriented upward and a lower end 404 thereof is oriented downward. The backpack battery pack 410 may also have sidewalls 406 that extend between the upper end 402 and the lower end 404 along sides of the backpack battery pack 410. The sidewalls 406 may form part of a battery pack housing 420, which may form a rigid casing or housing around the battery pack.

In an example embodiment, the battery pack is oriented such that the fans 42 are proximate to the lower end 404 of the backpack battery pack 410. Accordingly, an inlet screen 424 through which incoming air may be drawn is also disposed at the lower end 404 of the backpack battery pack 410. Moreover, the inlet screen 424 is disposed such that it is oriented downward when the backpack battery pack 410 is worn on the user's back so that incoming air is drawn upward and the fans 42 are less exposed to the elements (e.g., rain and falling debris). Air is therefore passed through channels (e.g., airflow channels 70) that are oriented vertically when worn on the user's back. Moreover, the inlet and the airflow channels are both aligned vertically, while the outlet of the air is oriented horizontally.

In this regard, after the air is passed through the battery pack as described above, the air is rejected out of an outlet screen 422 that is disposed in portions of the sidewalls 406 that are proximate to the upper end 402. Since the outlet screen 422 is oriented to the side of the backpack battery pack 410, again rain, falling debris and/or other potential contaminants may be inhibited from entering the battery pack housing 420. In some cases, two outlet screens 422 may be provided such that they allow air to exit the backpack battery pack 410 in opposite directions to distribute ejected air behind and away from the user. The placement of the inlet screen 422 and outlet screen 424 also enables the battery pack to be shielded by the user's body at least in part from debris or other environmental materials that may be stirred via operation of the equipment powered by the battery pack since such equipment powered by the battery pack is typically utilized in front of the user.

In an example embodiment, the backpack battery pack 410 may further include a start button 412 disposed at a portion of a top cover 428 of the battery pack housing 420. LED lights 414 may also be provided to indicate an operational state of the backpack battery pack 410 and/or provide information about thermal properties of the backpack battery pack 410. The cell retainer of the battery pack may be disposed below the top cover 428 of the battery pack housing 420 and may be mated with a bottom cover 426. As such, the cell retainer may be completely enclosed between the bottom cover 426 and the top cover 428. Connectors 427 may be provided at various locations in order to facilitate fixing the bottom cover 426 to the top cover 428. In some embodiments, a handle 429 may be provided at the upper end 402 of the battery pack housing 420 to enable the user to carry the backpack battery pack 410 when it is not strapped to the user's back. In an example embodiment, seals may be provided proximate to the inlet screen 424 (or the outlet screen 422) between the battery pack housing 420 and the cell retainer to further inhibit the entry of air, moisture and debris between the battery pack housing 420 and cell retainer.

In some embodiments, one or more fuse elements 418 may be provided between the battery pack and the equipment that is powered thereby. Moreover, a PCB 417 may be provided with control circuitry that may be used to control the application of electrical power from the battery pack.

### V. BATTERY PACK POWER ADAPTER

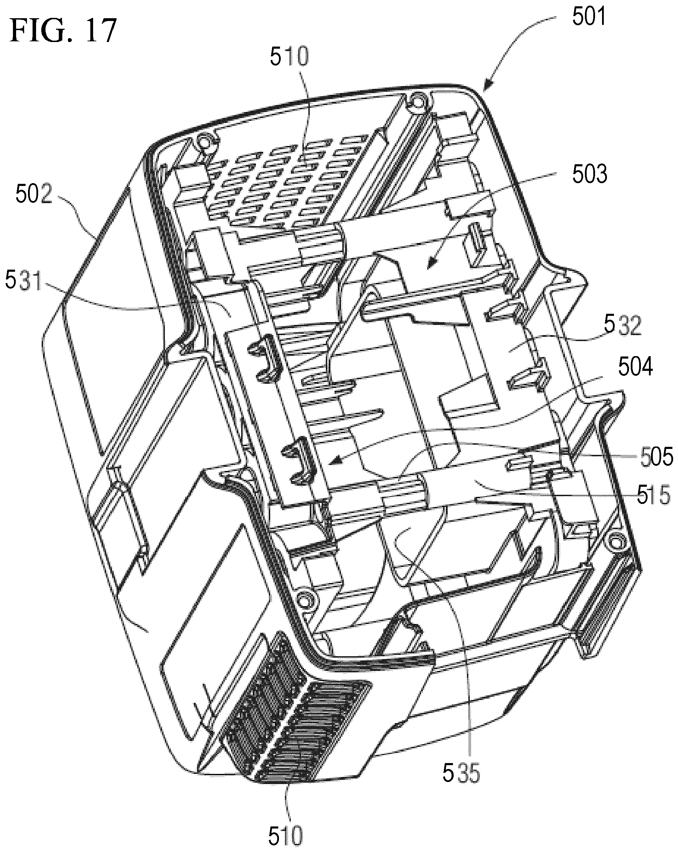

FIG 17 shows a perspective and partially broken up view of a power adapter 501 (which is the same adapter mentioned above using reference numeral 1). The power adapter is electrically connected to the positive and negative terminals of the battery pack so that the battery cells in the battery pack provide power to a power tool which connected to the adapter 501. Accordingly, the power adapter 501 is to be inserted into a cordless hand-held power tool and electrically and mechanically coupled to the cordless power tool for electrical supply of the power tool.

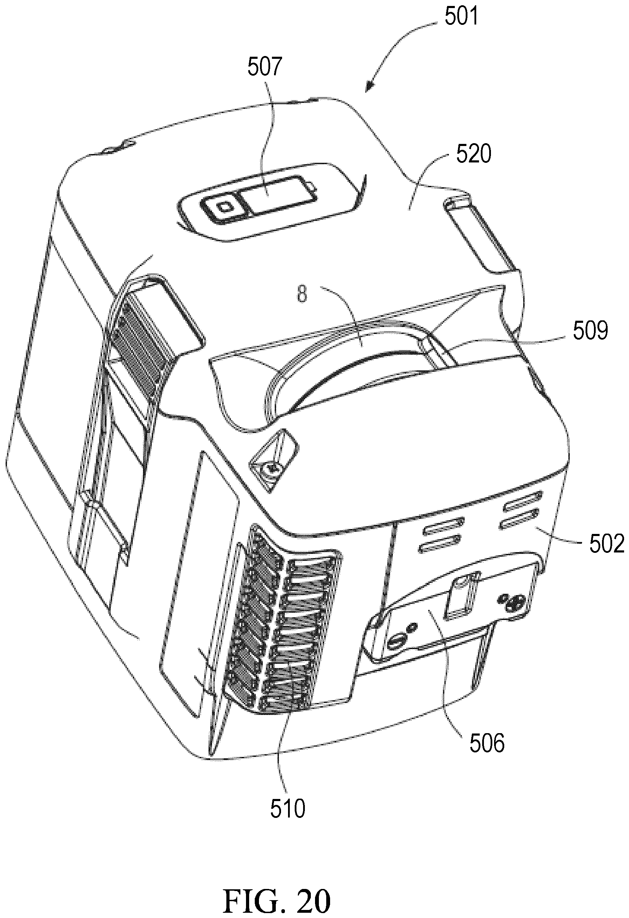

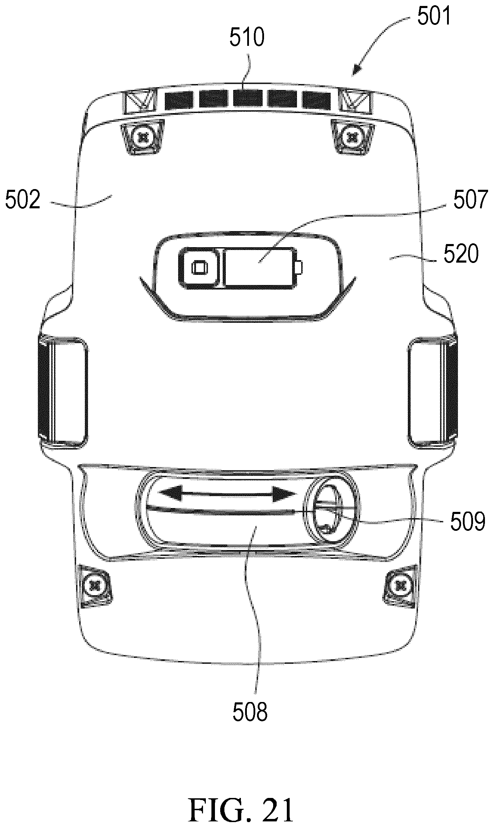

The power adapter 501 comprises an adapter housing 502 in which a fixture unit 503 is accommodated, in particular inserted from above and slidably placed and/or removed from the housing 502. When the fixture unit 503 is properly mounted inside the adapter housing 502, the housing 502 is closed from above by a housing lid 520 which is fixed to the main part of the housing 502, e.g. by means of screws as shown in FIG 20 and 21.

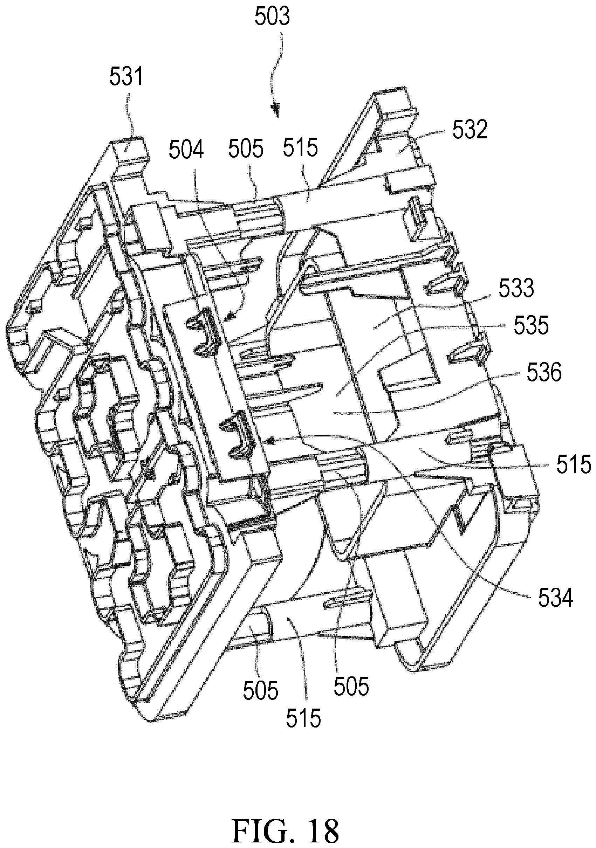

The fixture unit 503 without or outside of the adapter housing 502 is shown in FIG 18. The fixture unit 503 comprises two halves or two fixture sub-units 531 and 532, each having a plate-like base structure and a number of fastening elements 505 and 515 respectively by which fastening elements 505 and 515 the fixture sub-units 531 and 532 are fastened to each other, in particular by snapping or shape-locking or also screws. In the assembled or fastened state the two fixture sub-units 531 and 532 and the fastening elements 505 and 515 form a box-like or frame-like fixture unit 503 and enclose an inner space 536 of the fixture unit 503.

The power adapter 501 comprises a contact and coupling electrical interface 506 adapted to be coupled to a respective counter interface of a cordless power tool.

In the inner space 536 of the fixture unit 503 it is, in a direct powering operation, possible to arrange battery cells to electrically power the power tool directly from the power adapter 501 through the electrical interface 506 of the power adapter 501 being electrically coupled with a corresponding interface of the power tool when the power adapter 501 is mounted in the power tool.

When external batteries such as backpack battery assemblies to be carried on the back of the user of the power tool are used for electric supply of the power tool the power adapter 501 does not need to comprise batteries by itself. Rather, the power adapter 501 in this case is connected to the external batteries by means of a cable 509 on one hand and by its electrical interface 506 to the power adapter 501 on the other hand. In this indirect powering operation case the power adapter 501 has only the passive function of electrically connecting the power tool with the external batteries, in particular backpack batteries.

The power adapter 501 has no batteries and thus lacks the weight it has in the direct powering operation. This can lead to an unpleasant and different behavior of the power tool during indirect powering operation as compared to direct powering operation.

To compensate this disadvantage a counter-weight or balancing weight 504 is provided in the power adapter 501 to reach at least approximately the same weight and balance of the power tool as if batteries were present. Thus, for each power tool and battery set a corresponding set of balancing weights can be provided.

The balancing weight 504 is arranged in the same region of the power adapter 502, i.e. here the inner space 536 of the fixture unit 503, where in the direct powering operation the batteries would be placed so as to emulate or produce the same balancing behavior as if the batteries were present in the same place. In this case the balancing weight 504 can have the same mass as the batteries which may be placed in the adapter.

As shown in FIGS. 20 and 21, the power adapter 501 also comprises a display unit 507. The display unit 507 is adapted and attached in such a way that, in an indirect powering operation, the loading or charge status and/or temperature of a remote, movable energy source, such as a backpack battery pack, can be displayed and observed by a user during operation of the power tool. Such a display unit 507 is of particular advantage for backpack battery packs, as the loading status of the battery pack on the back of the user in this way can be easily checked during operation of a tool connected to the energy source and power adapter 501. Signals for controlling the display unit may be outputted from an electronic controller or the like of the energy source. Of course it is also possible that the display unit 507 shows the charge status and/or temperature of batteries inside the power adapter 501 in a direct powering operation, in particular when the first fixture sub-unit 531 with the weight 504 is replaced by a sub-unit adapted for batteries.

Furthermore, the power adapter 501 comprises a slewable cable outlet 508. The slewable cable outlet 508 has an outlet opening 509. The outlet opening 509 is adapted to guide through an electric cable for connecting the power adapter 501, in particular electrical contacts of the coupling interface of the power adapter 501, to a remote energy source, such as a backpack battery pack.

The slewable cable outlet 508 comprises a slewable member attached and mounted to the housing 502 to be slewable as indicated by the double arrow in FIG 21. In FIG 21, the slewable member is slewable in a horizontal plane. However, it is also or in the alternative possible to implement the slewable member to be slewable in a vertical plane. Such a slewable member will greatly ease operation of a tool or device connected to the power adapter 501 since the cable has a slewing range of up to 180° in a rotational movement. Of course also a spherical movement is possible, i.e. a rotation about two orthogonal axes.

Also the housing 502 comprises air vents 510 which allow a flow of air through the housing 502. As can be seen, despite of the balance weight 504 and fixture unit 503 accommodated in the housing 502, the housing 502 still comprises a dead volume. This dead volume may contribute to enhanced air flow which may be used to cool the tool or device operated via the power adapter 501.

### VI. BATTERY PROTECTION SYSTEM

In some embodiments, a relay 602 may be disposed between the power tool 610 and the battery 600 as a safety or protection system. Figure 22 illustrates an embodiment of the connection of the relay 602 with respect to the battery 600. The relay 602 may be located on top of the battery 600 and be connected directly to the battery output so that the relay 602 can disconnect the power of the battery 600. A fuse 604 may be connected in series between the relay 602 (and thus the battery 600) and a printed circuit board ("PCB") 606 so that if power exceeds a threshold amount from the relay, the fuse will disconnect the power to the PCB 606. The relay 602 (through the PCB 606) may be connected to a switch 608 that can be activated or deactivated by the user. The battery 600 must be activated (e.g., the switch turned on) before power is allowed to flow to the power tool 610 (which may also have its own switch).

The output of the relay 602 is not only attached to the fuse 604 but also to the load 610. The relay 602 may electrically disconnect the load 610 from the battery 600 upon deactivation of the switch 608 by the user. In one embodiment, the relay 602 is controlled by electronics on the PCB 606 so that the relay 602 deactivates the battery 600 in certain critical situations, such as over-heating, low temperature (being cold environment), deep discharge of the battery, detection of unusually high current at the battery, high voltage issue during charging, or any other situation which may create an unsafe condition or which may damage the battery or power tool. In the case of over-heating or in low temperature detection, a temperature sensor of the battery determines the temperature and sends the temperature reading to the PCB. Upon exceeding a predefined temperature threshold (overheating) or being below a predetermined threshold (low temperature), the PCB sends a signal to the relay to disconnect the battery 600 from the load 610. In the event of low voltage (deep discharge) or high voltage, a voltage sensor on the PCB triggers disconnection of the relay 602 if the voltage is under (low voltage event) a certain amount or over (high voltage event) a predefined voltage. Similarly, in the event of a high current, a current sensor on the PCB determines if the current exceeds a threshold amount of current and if so, the relay 602 disconnects the battery 620 from the load 610.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A backpack battery comprising a battery pack incorporated within the backpack battery (400), wherein the battery pack (10) comprises:
a plurality of battery cells (20), wherein each battery cell comprises a first end, a second end, and a longitudinal axis running through the first end and the second end;
a cell housing (54) comprising a first wall, a second wall, and a cell retention structure there-between, wherein the cell retention structure is configured to retain the plurality of battery cells (20) in matrix of rows and columns such that the longitudinal axis of each battery cell is substantially parallel to the longitudinal axes of the other battery cells;
a plurality of connectors (33) located on the exterior of the cell housing (54) and electrically connected to the plurality of battery cells through openings in the first and second walls of the cell housing (54), wherein the plurality of connectors (33) electrically connect the battery cells in each row in parallel and the battery cells in each column in series; and
wherein the backpack battery (400) is affixed to a harness that is configured to attach the backpack battery to a user's back such that the battery pack (10) is configured to be worn on the user's back during operation,
wherein the backpack battery comprises an upper end, a lower end, and sidewalls that extend between the upper end and the lower end along sides of the backpack battery pack (410),
wherein the backpack battery is oriented such that incoming air may be drawn into the battery pack (10) from the lower end and is dispelled from the battery pack (10) from an outlet screen that is disposed in portions of the sidewalls that are proximate to the upper end, and
wherein the backpack battery further comprises a control element disposed at a portion of the battery pack housing.

2. The backpack battery of claim 1,
wherein the first end of each battery cell comprises a positive terminal,
wherein the second end of each battery cell comprises a negative terminal,
wherein the plurality of battery cells (20) comprises a first row of battery cells comprising a first group of battery cells located adjacent to each other,
wherein the plurality of battery cells comprises a second row of battery cells comprising a second group of battery cells located adjacent to each other,
wherein the second row of battery cells is located adjacent to the first row of battery cells such that the positive terminals of the first row of battery cells are aligned with the negative terminals of the second row of battery cells,
wherein the battery pack (10) further comprises a first connector (33) electrically connecting the positive terminals of each of the battery cells of the first row of battery cells to the negative terminals of the second row of battery cells,
a second connector electrically connecting the negative terminals of the first group of battery cells to each other,
a third row of battery cells comprising a third group of battery cells located adjacent to each other such that the that the positive terminals are aligned with each other and the negative terminals are aligned with each other,
wherein the first group of battery cells are located adjacent to each other such that the positive terminals are aligned with each other and the negative terminals are aligned with each other,
wherein the second group of battery cells are located adjacent to each other such that the positive terminals are aligned with each other and the negative terminals are aligned with each other,
wherein the first connector (33) electrically connects the positive terminals of the first group of battery cells to each other,
wherein the second row of battery cells is located adjacent to the third row of battery cells such that the positive terminals of the second row of battery cells are aligned with the negative terminals of the third row of battery cells, and
wherein the second connector electrically connects the negative terminals of each of the third row of battery cells so that the negative terminals of the third row of battery cells are electrically connected to the positive terminals of the second row of battery cells.

3. The backpack battery of claim 1,
wherein the plurality of battery cells define a battery pack (10) positive terminal and a battery pack (10) negative terminal,
wherein the battery pack positive and negative terminals are connected to a power adapter (1) via an electrical cable (11), and
wherein the power adapter has a coupling electrical interface that is configured to attached to a power tool (14).

4. The backpack battery of claim 1,
wherein a cell connector of the plurality of connectors (33) comprises a plurality of metallic arms arranged in a hierarchical structure including at least two levels each having at least one arm, such that the cell connector defines a plurality of current paths from each of the contacted cells to a combined output, and
wherein the plurality of current paths are substantially equal to each other in length.

5. The backpack battery of claim 1, wherein the cell retainer assembly (30) overlaps opposing longitudinal ends of the battery cells (20) and includes a seal (24) proximate to each longitudinal end to seal a space between the respective longitudinal ends of the battery cells and the cell retainer assembly.

6. The backpack battery according to any of the previous claims, wherein the plurality of battery cells comprises a first row of battery cells located adjacent to each other such that the positive terminals are aligned with each other and the negative terminals are aligned with each other, wherein the plurality of battery cells comprises a second row of battery cells located adjacent to each other such that the positive terminals are aligned with each other and the negative terminals are aligned with each other, and wherein the second row of battery cells is located adjacent to the first row of battery cells such that the positive terminals of the first row of battery cells are aligned with the negative terminals of the second row of battery cells; and wherein
the plurality of connectors comprises a first unitary connector (33) electrically connecting the positive terminals of at least two battery cells of the first row of battery cells to each other and to the negative terminals of at least two battery cells of the second row of battery cells, wherein the first unitary connector comprises at least one fuse located electrically between at least one battery cell and a plurality of other battery cells electrically connected together by the first unitary connector; and wherein the first unitary connector comprises a fuse of the at least one fuse disposed between a first battery cell and a second battery cell so that when the fuse breaks down due to current the first battery cell is electrically isolated and disconnected from the other battery cells.

7. The backpack battery of claim 6, further comprising:
a third row of battery cells (20) located adjacent to each other such that the positive terminals are aligned with each other and the negative terminals are aligned with each other, wherein the third row of battery cells is located adjacent to the second row of battery cells such that the positive terminals of the second row of battery cells are aligned with the negative terminals of the third row of battery cells, wherein the first unitary connector (33) connects the first row of battery cells in parallel; and
the plurality of connectors (33) further comprises a second unitary connector (33) electrically connecting the positive terminals of at least two battery cells of the second row of battery cells to each other and to the negative terminals of at least two battery cells of the third row of battery cells, wherein the unitary connector comprises at least one fuse located electrically between at least one battery cell and a plurality of other battery cells electrically connected together by the unitary connector, wherein the second unitary connector connects the second row of battery cells in parallel.

8. The backpack battery according to any of the previous claims, wherein the plurality of connectors (33) connect to a printed circuit board, wherein the printed circuit board is connected to a load, and the backpack battery further comprises
a relay in series between the printed circuit board and the battery cells so that when a predetermined event occurs, the relay disconnects the battery cells from the load,
wherein the predetermined event comprises one of detecting overheating of the battery cells, detecting that a temperature of the battery cells being under a temperature threshold, detecting a voltage of the battery cells exceeding a predefined voltage, detecting a voltage of the battery cells being less than a predefined threshold, or detecting a high current of the battery cells, wherein the predetermined event is determined by a sensor located on the printed circuit board or in the battery cells.

## Patentansprüche

1. Rucksack-Batterie, umfassend ein Batteriepaket, das in die Rucksack-Batterie (400) eingebaut ist, wobei das Batteriepaket (10) umfasst:
eine Vielzahl von Batteriezellen (20), wobei jede Batteriezelle ein erstes Ende, ein zweites Ende und eine Längsachse umfasst, die durch das erste Ende und das zweite Ende verläuft;
ein Zellengehäuse (54) umfassend ein erste Wand, eine zweite Wand und eine Zellenhaltestruktur dazwischen, wobei die Zellenhaltestruktur dazu ausgestaltet ist, die Vielzahl von Batteriezellen (20) in einer Matrix aus Reihen und Spalten zu halten, so dass die Längsachse jeder Batteriezelle im Wesentlichen parallel zu den Längsachsen der anderen Batteriezellen ist;
eine Vielzahl von Verbindern (33), die sich an der Außenseite des Zellengehäuses (54) befinden und elektrisch mit der Vielzahl von Batteriezellen durch Öffnungen in den ersten und zweiten Wänden des Zellengehäuses (54) verbunden sind, wobei die Vielzahl von Verbindern (33) die Batteriezellen in jeder Reihe parallel und die Batteriezellen in jeder Spalte in Reihe elektrisch verbinden; und
wobei die Rucksack-Batterie (400) an einem Tragegeschirr befestigt ist, das dazu ausgestaltet ist, die Rucksack-Batterie an dem Rücken eines Benutzers so anzubringen, dass das Batteriepaket (10) dazu ausgestaltet ist, während des Betriebs auf dem Rücken des Benutzers getragen zu werden,
wobei die Rucksack-Batterie ein oberes Ende, ein unteres Ende und Seitenwände umfasst, die sich zwischen dem oberen Ende und dem unteren Ende entlang der Seiten des Rucksack-Batteriepakets (410) erstrecken,
wobei die Rucksack-Batterie so orientiert ist, dass eingehende Luft von dem unteren Ende aus in das Batteriepaket (10) eingezogen werden kann und von dem Batteriepaket (10) aus einem Auslassgitter ausgestoßen wird, das in Abschnitten der Seitenwände angeordnet ist, die proximal zu dem oberen Ende sind,
und
wobei die Rucksack-Batterie ferner ein Steuerelement umfasst, das an einem Abschnitt des Batteriepaket-Gehäuses angeordnet ist.

2. Rucksack-Batterie nach Anspruch 1, wobei das erste Ende jeder Batteriezelle eine positive Klemme umfasst, wobei das zweite Ende jeder Batteriezelle eine negative Klemme umfasst,
wobei die Vielzahl von Batteriezellen (20) eine erste Reihe von Batteriezellen umfasst, die eine erste Gruppe von Batteriezellen umfasst, die zueinander benachbart sind,
wobei die Vielzahl von Batteriezellen eine zweite Reihe von Batteriezellen umfasst, die eine zweite Gruppe von Batteriezellen umfasst, die zueinander benachbart sind,
wobei die zweite Reihe von Batteriezellen zu der ersten Reihe von Batteriezellen benachbart ist, so dass die positiven Klemmen der ersten Reihe von Batteriezellen mit den negativen Klemmen der zweiten Reihe von Batteriezellen ausgerichtet sind,
wobei das Batteriepaket (10) ferner einen ersten Verbinder (33) umfasst, der die positiven Klemmen jeder der Batteriezellen der ersten Reihe von Batteriezellen mit den negativen Klemmen der zweiten Reihe von Batteriezellen elektrisch verbindet,
einen zweiten Verbinder, der die negativen Klemmen der ersten Gruppe von Batteriezellen miteinander elektrisch verbindet,
eine dritte Reihe von Batteriezellen umfassend eine dritte Gruppe von Batteriezellen, die sich so benachbart zueinander befinden, dass die positiven Klemmen miteinander ausgerichtet sind und die negativen Klemmen miteinander ausgerichtet sind,
wobei die erste Gruppe von Batteriezellen sich so benachbart zueinander befindet, dass die positiven Klemmen miteinander ausgerichtet sind und die negativen Klemmen miteinander ausgerichtet sind,
wobei die zweite Gruppe von Batteriezellen sich so benachbart zueinander befindet, dass die positiven Klemmen miteinander ausgerichtet sind und die negativen Klemmen miteinander ausgerichtet sind,
wobei der erste Verbinder (33) die positiven Klemmen der ersten Gruppe von Batteriezellen elektrisch miteinander verbindet,
wobei die zweite Reihe von Batteriezellen zu der dritten Reihe von Batteriezellen benachbart ist, so dass die positiven Klemmen der zweiten Reihe von Batteriezellen mit den negativen Klemmen der dritten Reihe von Batteriezellen ausgerichtet sind, und
wobei der zweite Verbinder die negativen Klemmen einer jeden der dritten Reihe von Batteriezellen so elektrisch verbindet, dass die negativen Klemmen der dritten Reihe von Batteriezellen elektrisch mit den positiven Klemmen der zweiten Reihe von Batteriezellen verbunden sind.

3. Rucksack-Batterie nach Anspruch 1, wobei die Vielzahl von Batteriezellen eine positive Klemme des Batteriepakets (10) und eine negative Klemme des Batteriepakets (10) definieren,
wobei die positiven und negativen Batteriepaket-Klemmen mit einem Leistungsadapter (1) über ein elektrisches Kabel (11) verbunden sind, und
wobei der Leistungsadapter eine elektrische Kopplungsschnittstelle aufweist, die dazu ausgestaltet ist, an einem Elektrowerkzeug (14) angebracht zu werden.

4. Rucksack-Batterie nach Anspruch 1, wobei ein Zellenverbinder der Vielzahl von Verbindern (33) eine Vielzahl von metallischen Armen umfasst, die in einer hierarchischen Struktur angeordnet sind, die zumindest zwei Ebenen umfasst, die jeweils zumindest einen Arm aufweisen, so dass der Zellenverbinder eine Vielzahl von Strompfaden von jeder der kontaktierten Zellen zu einem kombinierten Ausgang definiert, und
wobei die Vielzahl von Strompfaden einander in der Länge im Wesentlichen gleichen.

5. Rucksack-Batterie nach Anspruch 1, wobei die Zellenhalterungsanordnung (30) gegenüberliegende Längsenden der Batteriezellen (20) überlappt und eine Dichtung (24) proximal zu jedem Längsende beinhaltet, um einen Raum zwischen den jeweiligen Längsenden der Batteriezellen und der Zellenhalterungsaordnung abzudichten.

6. Rucksack-Batterie nach einem der vorhergehenden Ansprüche, wobei die Vielzahl von Batteriezellen eine erste Reihe von Batteriezellen umfasst, die so zueinander benachbart sind, dass die positiven Klemmen miteinander ausgerichtet sind und die negativen Klemmen miteinander ausgerichtet sind, wobei die Vielzahl von Batteriezellen eine zweite Reihe von Batteriezellen umfasst, die so zueinander benachbart sind, dass die positiven Klemmen miteinander ausgerichtet sind und die negativen Klemmen miteinander ausgerichtet sind, und wobei die zweite Reihe von Batteriezellen zu der ersten Reihe von Batteriezellen benachbart ist, so dass die positiven Klemmen der ersten Reihe von Batteriezellen mit den negativen Klemmen der zweiten Reihe von Batteriezellen ausgerichtet sind; und wobei
die Vielzahl von Verbindern einen ersten einheitlichen Verbinder (33) umfasst, der die positiven Klemmen von mindestens zwei Batteriezellen der ersten Reihe von Batteriezellen miteinander und mit den negativen Klemmen von mindestens zwei Batteriezellen der zweiten Reihe von Batteriezellen verbindet, wobei der erste einheitliche Verbinder zumindest eine Schmelzsicherung umfasst, die elektrisch zwischen zumindest einer Batteriezelle und einer Vielzahl von anderen Batteriezellen verbunden ist, die miteinander durch den ersten einheitlichen Verbinder elektrisch verbunden werden; und wobei der erste einheitliche Verbinder eine Sicherung der zumindest einen Sicherung umfasst, die zwischen einer ersten Batteriezelle und einer zweiten Batteriezelle angeordnet ist, so dass, wenn die Sicherung aufgrund des Stroms zerstört wird, die erste Batteriezelle elektrisch isoliert und von den anderen Batteriezellen getrennt wird.

7. Rucksack-Batterie nach Anspruch 6, ferner umfassend:
eine dritte Reihe von Batteriezellen (20), die so benachbart zueinander sind, dass die positiven Klemmen miteinander ausgerichtet sind und die negativen Klemmen miteinander ausgerichtet sind,
wobei die dritte Reihe von Batteriezellen so benachbart zu der zweiten Reihe von Batteriezellen angeordnet ist, dass die positiven Klemmen der zweiten Reihe von Batteriezellen mit den negativen Klemmen der dritten Reihe von Batteriezellen ausgerichtet sind, wobei der erste einheitliche Verbinder (33) die erste Reihe von Batteriezellen parallel verbindet; und
die Vielzahl von Verbindern (33) ferner einen zweiten einheitlichen Verbinder (33) umfasst, der die positiven Klemmen von mindestens zwei Batteriezellen der zweiten Reihe von Batteriezellen miteinander und mit den negativen Klemmen von mindestens zwei Batteriezellen der dritten Reihe von Batteriezellen verbindet, wobei der einheitliche Verbinder zumindest eine Sicherung umfasst, die elektrisch zwischen zumindest einer Batteriezelle und einer Vielzahl von anderen Batteriezellen angeordnet ist, die miteinander durch den einheitlichen Verbinder verbunden sind, wobei der zweite einheitliche Verbinder die zweite Reihe von Batteriezellen parallel verbindet.

8. Rucksack-Batterie nach einem der vorhergehenden Ansprüche, wobei die Vielzahl von Verbindern (33) mit einer gedruckten Schaltungsplatte verbunden sind, wobei die gedruckte Schaltungsplatte mit einer Last verbunden ist, und die Rucksack-Batterie ferner ein Relais in Reihe zwischen der gedruckten Schaltungsplatte und den Batteriezellen umfasst, so dass, wenn ein vorbestimmtes Ereignis eintritt, das Relais die Batteriezellen von der Last trennt,
wobei das vorbestimmte Ereignis eines der folgenden umfasst: Erfassen einer Überhitzung der Batteriezellen, Erfassen, dass eine Temperatur der Batteriezellen unter einer Temperaturschwelle liegt, Erfassen, dass eine Spannung der Batteriezellen eine vordefinierte Spannung überschreitet, Erfassen, dass eine Spannung der Batteriezellen niedriger ist als eine vorbestimmte Schwelle, oder Erfassen eines hohen Stroms der Batteriezellen, wobei das vorbestimmte Ereignis durch einen Sensor bestimmt wird, der sich an der gedruckten Schaltungsplatte oder in den Batteriezellen befindet.

## Revendications

1. Batterie pour sac à dos comprenant un bloc-batterie incorporé dans la batterie pour sac à dos (400), dans laquelle le bloc-batterie (10) comprend :
une pluralité d'éléments de batterie (20), où chaque élément de batterie comprend une première extrémité, une deuxième extrémité et un axe longitudinal traversant la première extrémité et la deuxième extrémité ;
un boîtier d'éléments (54) comprenant une première paroi, une deuxième paroi et une structure de retenue d'éléments entre elles, où la structure de retenue d'éléments est configurée pour retenir la pluralité d'éléments de batterie (20) dans une matrice de rangées et de colonnes de sorte que l'axe longitudinal de chaque élément de batterie soit essentiellement parallèle aux axes longitudinaux des autres éléments de batterie ;
une pluralité de connecteurs (33) situés à l'extérieur du boîtier d'éléments (54) et reliés électriquement à la pluralité d'éléments de batterie à travers des ouvertures dans les première et deuxième parois du boîtier d'éléments (54), où la pluralité de connecteurs (33) relient électriquement les éléments de batterie dans chaque rangée en parallèle et les éléments de batterie de chaque colonne en série ; et
dans laquelle la batterie pour sac à dos (400) est fixée à un harnais qui est configuré pour attacher la batterie pour sac à dos au dos d'un utilisateur de sorte que le bloc-batterie (10) soit configuré pour être porté sur le dos de l'utilisateur pendant le fonctionnement,
dans laquelle la batterie pour sac à dos comprend une extrémité supérieure, une extrémité inférieure et des parois latérales qui s'étendent entre l'extrémité supérieure et l'extrémité inférieure le long des côtés du bloc-batterie pour sac à dos (410),
dans laquelle la batterie pour sac à dos est orientée de sorte que l'air entrant puisse être aspiré dans le bloc-batterie (10) depuis l'extrémité inférieure et soit dissipé du bloc-batterie (10) à partir d'un écran de sortie qui est disposé dans des parties des parois latérales qui sont proches de l'extrémité supérieure, et
dans laquelle la batterie pour sac à dos comprend en outre un élément de commande disposé au niveau d'une partie du boîtier de bloc-batterie.

2. Batterie pour sac à dos de la revendication 1,
dans laquelle la première extrémité de chaque élément de batterie comprend une borne positive,
dans laquelle la deuxième extrémité de chaque élément de batterie comprend une borne négative,
dans laquelle la pluralité d'éléments de batterie (20) comprend une première rangée d'éléments de batterie comprenant un premier groupe d'éléments de batterie situés de manière adjacente les uns aux autres,
dans laquelle la pluralité d'éléments de batterie comprend une deuxième rangée d'éléments de batterie comprenant un deuxième groupe d'éléments de batterie situés de manière adjacente les uns aux autres,
dans laquelle la deuxième rangée d'éléments de batterie est située de manière adjacente à la première rangée d'éléments de batterie de sorte que les bornes positives de la première rangée d'éléments de batterie soient alignées avec les bornes négatives de la deuxième rangée d'éléments de batterie,
dans laquelle le bloc-batterie (10) comprend en outre un premier connecteur (33) reliant électriquement les bornes positives de chacun des éléments de batterie de la première rangée d'éléments de batterie aux bornes négatives de la deuxième rangée d'éléments de batterie,
un deuxième connecteur reliant électriquement les bornes négatives du premier groupe d'éléments de batterie les unes aux autres,
une troisième rangée d'éléments de batterie comprenant un troisième groupe d'éléments de batterie situés de manière adjacente les uns aux autres de sorte que les bornes positives soient alignées les unes avec les autres et les bornes négatives soient alignées les unes avec les autres,
dans laquelle le premier groupe d'éléments de batterie sont situés de manière adjacente les uns aux autres de sorte que les bornes positives soient alignées les unes avec les autres et les bornes négatives soient alignées les unes avec les autres,
dans laquelle le deuxième groupe d'éléments de batterie sont situés de manière adjacente les uns aux autres de sorte que les bornes positives soient alignées les unes avec les autres et les bornes négatives soient alignées les unes avec les autres,
dans laquelle le premier connecteur (33) relie électriquement les bornes positives du premier groupe d'éléments de batterie les unes aux autres,
dans laquelle la deuxième rangée d'éléments de batterie est située de manière adjacente à la troisième rangée d'éléments de batterie de sorte que les bornes positives de la deuxième rangée d'éléments de batterie soient alignées avec les bornes négatives de la troisième rangée d'éléments de batterie, et
dans laquelle le deuxième connecteur relie électriquement les bornes négatives de chacun de la troisième rangée d'éléments de batterie de sorte que les bornes négatives de la troisième rangée d'éléments de batterie soient reliées électriquement aux bornes positives de la deuxième rangée d'éléments de batterie.

3. Batterie pour sac à dos de la revendication 1,
dans laquelle la pluralité d'éléments de batterie définissent une borne positive de bloc-batterie (10) et une borne négative de bloc-batterie (10),
dans laquelle les bornes positive et négative de bloc-batterie sont reliées à un adaptateur d'alimentation (1) par un câble électrique (11), et
dans laquelle l'adaptateur d'alimentation a une interface électrique de couplage qui est configurée pour être attachée à un outil électrique (14).

4. Batterie pour sac à dos de la revendication 1,
dans laquelle un connecteur d'éléments de la pluralité de connecteurs (33) comprend une pluralité de bras métalliques agencés dans une structure hiérarchique comportant au moins deux niveaux ayant chacun au moins un bras, de sorte que le connecteur d'éléments définisse une pluralité de trajets de courant à partir de chacun des éléments mis en contact vers une sortie combinée, et
dans laquelle la pluralité de trajets de courant ont des longueurs essentiellement égales les unes aux autres.

5. Batterie pour sac à dos de la revendication 1, dans laquelle l'ensemble de retenue d'éléments (30) chevauche des extrémités longitudinales opposées des éléments de batterie (20) et comporte un joint d'étanchéité (24) proche de chaque extrémité longitudinale pour assurer l'étanchéité d'un espace entre les extrémités longitudinales respectives des éléments de batterie et l'ensemble de retenue d'éléments.

6. Batterie pour sac à dos selon l'une des revendications précédentes, dans laquelle la pluralité d'éléments de batterie comprend une première rangée d'éléments de batterie situés de manière adjacente les uns aux autres de sorte que les bornes positives soient alignées les unes avec les autres et les bornes négatives soient alignées les unes avec les autres, où la pluralité d'éléments de batterie comprend une deuxième rangée d'éléments de batterie situés de manière adjacente les uns aux autres de sorte que les bornes positives soient alignées les unes avec les autres et les bornes négatives soient alignées les unes avec les autres, et où la deuxième rangée d'éléments de batterie est située de manière adjacente à la première rangée d'éléments de batterie de sorte que les bornes positives de la première rangée d'éléments de batterie soient alignées avec les bornes négatives de la deuxième rangée d'éléments de batterie ; et où
la pluralité de connecteurs comprend un premier connecteur unitaire (33) reliant électriquement les bornes positives d'au moins deux éléments de batterie de la première rangée d'éléments de batterie l'une à l'autre et aux bornes négatives d'au moins deux éléments de batterie de la deuxième rangée d'éléments de batterie, où le premier connecteur unitaire comprend au moins un fusible situé électriquement entre au moins un élément de batterie et une pluralité d'autres éléments de batterie reliés électriquement entre eux par le premier connecteur unitaire ; et où le premier connecteur unitaire comprend un fusible de l'au moins un fusible disposé entre un premier élément de batterie et un deuxième élément de batterie de sorte que lorsque le fusible claque en raison du courant, le premier élément de batterie soit électriquement isolé et débranché des autres éléments de batterie.

7. Batterie pour sac à dos de la revendication 6, comprenant en outre :
une troisième rangée d'éléments de batterie (20) situés de manière adjacente les uns aux autres de sorte que les bornes positives soient alignées les unes avec les autres et les bornes négatives soient alignées les unes avec les autres, où la troisième rangée d'éléments de batterie est située de manière adjacente à la deuxième rangée d'éléments de batterie de sorte que les bornes positives de la deuxième rangée d'éléments de batterie soient alignées avec les bornes négatives de la troisième rangée d'éléments de batterie, où le premier connecteur unitaire (33) relie la première rangée d'éléments de batterie en parallèle ; et
la pluralité de connecteurs (33) comprend en outre un deuxième connecteur unitaire (33) reliant électriquement les bornes positives d'au moins deux éléments de batterie de la deuxième rangée d'éléments de batterie l'une à l'autre et aux bornes négatives d'au moins deux éléments de batterie de la troisième rangée d'éléments de batterie, où le connecteur unitaire comprend au moins un fusible situé électriquement entre au moins une élément de batterie et une pluralité d'autres éléments de batterie reliés électriquement entre eux par le connecteur unitaire, où le deuxième connecteur unitaire relie la deuxième rangée d'éléments de batterie en parallèle.

8. Batterie pour sac à dos de l'une des revendications précédentes, dans laquelle la pluralité de connecteurs (33) se relient à une carte de circuit imprimé, dans laquelle la carte de circuit imprimé est reliée à une charge, et la batterie pour sac à dos comprend en outre
un relais en série entre la carte de circuit imprimé et les éléments de batterie de sorte que lorsqu'un événement prédéterminé se produit, le relais débranche les éléments de batterie de la charge,
dans laquelle l'événement prédéterminé comprend l'une parmi la détection de la surchauffe des éléments de batterie, la détection du fait qu'une température des éléments de batterie est inférieure à un seuil de température, la détection d'une tension des éléments de batterie dépassant une tension prédéfinie, la détection d'une tension des éléments de batterie inférieure à un seuil prédéfini, ou la détection d'un courant fort des éléments de batterie, où l'événement prédéterminé est déterminé par un capteur situé sur la carte de circuit imprimé ou dans les éléments de batterie.
